# EUROPEAN PATENT APPLICATION

(11) **EP 4 668 970 A1**
(43) Date of publication of application: **24.12.2025**
(21) Application number: 23921726.8
(22) Date of filing: 14.02.2023
(51) Int. Cl.: H04W 72/23

(54) **TRANSMISSION CONFIGURATION INDICATION STATE CONFIGURATION METHOD, APPARATUS AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/076034
(87) International publication number: WO 2024/168558

(57) **Abstract**

The present disclosure relates to a transmission configuration indication (TCI) state configuration method, apparatus and device, and a storage medium. The method comprises: receiving first indication information, wherein the first indication information is used for determining a unified TCI state, and the unified TCI is used for determining a unified TCI state, and the unified TCI state comprises N sets of TCI states, N being a positive integer, and receiving second indication information or determining a default rule, wherein the second indication information or default rule is used for determining from among the N sets of TCI states one or more sets of TCI states corresponding to a physical shared channel, and the physical shared channel is configured for transmission based on a single-frequency network (SFN) scheme. In the present disclosure, when a physical shared channel is configured with an SFN scheme, one or more sets of TCI states corresponding to the physical shared channel are determined by means of another piece of indication information or default rule different from that indicating a unified TCI state, thereby improving the transmission flexibility of the physical shared channel based on the unified TCI state.

## Description

### TECHNICAL FIELD

The disclosure relates to the field of wireless communication technology, and in particular to a method and a device for configuring transmission configuration indication state, a related device and a storage medium.

### BACKGROUND

In new radio (NR), especially when the communication frequency band is in frequency range 2, since high-frequency channels attenuate quickly, beam-based transmission and reception are required to ensure coverage.

In a conventional method, beams used for transmitting the physical downlink control channel (PDCCH) and/or the demodulation reference signal (DMRS) of PDCCH, the physical downlink shared channel (PDSCH) and/or the DMRS of PDSCH, the physical uplink control channel (PUCCH) and/or the DMRS of PUCCH, the physical uplink shared channel (PUSCH) and/or the DMRS of PUSCH, and/or reference signal(s) are all independently indicated. Among them, the reference signal may include a channel state information reference signal (CSI-RS), a sounding reference signal (SRS), a positioning reference signal (PRS), a time-frequency tracking reference signal (TRS), etc. For example, the CSI-RS may include a CSI-RS for channel state information measurement, a CSI-RS for beam measurement, or a CSI-RS for path loss estimation. The SRS may include an SRS for codebook-based or non-codebook-based channel state information measurement, an SRS for beam measurement, or an SRS for positioning measurement.

Typically, in the conventional method, the PDCCH and/or the DMRS of PDCCH and the PUCCH and/or the DMRS of PUCCH are transmitted by activating corresponding beams through a medium-access-control control element (MAC CE), while the PDSCH and/or the DMRS of PDSCH and the PUSCH and/or the DMRS of PUSCH are transmitted by indicating corresponding beams through downlink control information (DCI) signaling. The beam(s) may be indicated by a transmission configuration indication (TCI) state or spatial relation info.

In some arts, in order to reduce signaling overhead, a unified TCI state is proposed. Currently, the PDSCH and the PUSCH may be configured as a single frequency network (SFN) scheme. In a scenario of unified TCI state, how to configure the unified TCI state for terminals with different capabilities is still under discussion.

### SUMMARY

In order to overcome problems existing in the related arts, the disclosure provides methods and apparatuses for configuring a transmission configuration indication state, a related device, and a storage medium.

According to a first aspect of an embodiment of the disclosure, a method for configuring a transmission configuration indication (TCI) state is provided. The method is performed by a terminal and includes receiving first indication information, in which the first indication information is used for determining unified TCI states, the unified TCI states include N sets of TCI states, where N is a positive integer; and receiving second indication information or determining a default rule, in which the second indication information or the default rule is used for determining one or a plurality of sets of TCI states corresponding to a physical shared channel from the N sets of TCI states, and the physical shared channel is configured for transmission based on a single frequency network (SFN) scheme.

According to a second aspect of an embodiment of the disclosure, a method for configuring a transmission configuration indication (TCI) state is provided. The method is executed by a network device and includes: sending first indication information, in which the first indication information is used for determining unified TCI states, the unified TCI states include N sets of TCI states, where N is a positive integer; and sending second indication information or determining a default rule, in which the second indication information or the default rule is used for determining one or a plurality of sets of TCI states corresponding to a physical shared channel from the N sets of TCI states, and the physical shared channel is configured for transmission based on a single frequency network (SFN) scheme.

According to a third aspect of an embodiment of the disclosure, an apparatus for configuring a transmission configuration indication (TCI) state is provided. The apparatus includes: a receiving module configured to receive first indication information, in which the first indication information is used for determining unified TCI states, the unified TCI states include N sets of TCI states, where N is a positive integer; and to receive second indication information or a processing module configured to determine a default rule, in which the second indication information or the default rule is used for determining one or a plurality of sets of TCI states corresponding to a physical shared channel from the N sets of TCI states, and the physical shared channel is configured for transmission based on a single frequency network (SFN) scheme.

According to a fourth aspect of an embodiment of the disclosure, an apparatus for configuring a transmission configuration indication (TCI) state is provided. The apparatus includes: a sending module configured to send a first indication information, in which the first indication information is used for determining unified TCI states, the unified TCI states include N sets of TCI states, where N is a positive integer, and to send a second indication information; or a processing module configured to determine a default rule, in which the second indication information or the default rule is used for determine one or a plurality of sets of TCI states corresponding to a physical shared channel from the N sets of TCI states, and the physical shared channel is configured for transmission based on a single frequency network (SFN) scheme.

According to the fifth aspect of an embodiment of the disclosure, a device for configuring a transmission configuration indication (TCI) state is provided. The device includes a processor and a memory for storing processor executable instructions; in which the processor is configured to perform the method of the first aspect and any one method of the first aspect.

According to the sixth aspect of an embodiment of the disclosure, a device for configuring a transmission configuration indication (TCI) state is provided. The device includes a processor and a memory for storing processor executable instructions; in which the processor is configured to perform the method of the second aspect and any one method of the second aspect.

According to the seventh aspect of an embodiment of the disclosure, a non-temporary computer-readable storage medium is provided. When instructions in the storage medium are executed by a processor of a terminal, the terminal is caused to perform the method of the first aspect and any one method of the first aspect.

According to an eighth aspect of an embodiment of the disclosure, a non-temporary computer-readable storage medium is provided. When instructions in the storage medium are executed by a processor of a terminal, the terminal is caused to perform the method of the second aspect and any one method of the second aspect.

The technical solution according to the embodiments of the disclosure may include the following beneficial effects. In the case that the physical shared channel is configured with the SFN scheme, one or multiple sets of TCI states corresponding to the physical shared channel are determined through other indication information or the default rule different from indication information for indicating the unified TCI states, thereby improving the transmission flexibility of the physical shared channel based on the unified TCI states.

It is to be understood that the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram illustrating a wireless communication system according to an example embodiment.
FIG. 2 is a flowchart illustrating a method for configuring a transmission configuration indication state according to an example embodiment.
FIG. 3 is a flowchart illustrating another method for configuring a transmission configuration indication state according to an example embodiment.
FIG. 4 is a schematic diagram illustrating an apparatus for configuring a transmission configuration indication state according to an example embodiment.
FIG. 5 is a schematic diagram illustrating another apparatus for configuring a transmission configuration indication state according to an example embodiment.
FIG. 6 is a schematic diagram illustrating a device for configuring a transmission configuration indication state according to an example embodiment.
FIG. 7 is a schematic diagram illustrating another device for configuring a transmission configuration indication state according to an example embodiment.

### DETAILED DESCRIPTION

Here, example embodiments will be described in detail, examples of which are shown in the accompanying drawings. When the following description refers to the drawings, unless otherwise indicated, the same numbers in different drawings represent the same or similar elements. The implementations described in the following example embodiments do not represent all implementations consistent with the disclosure.

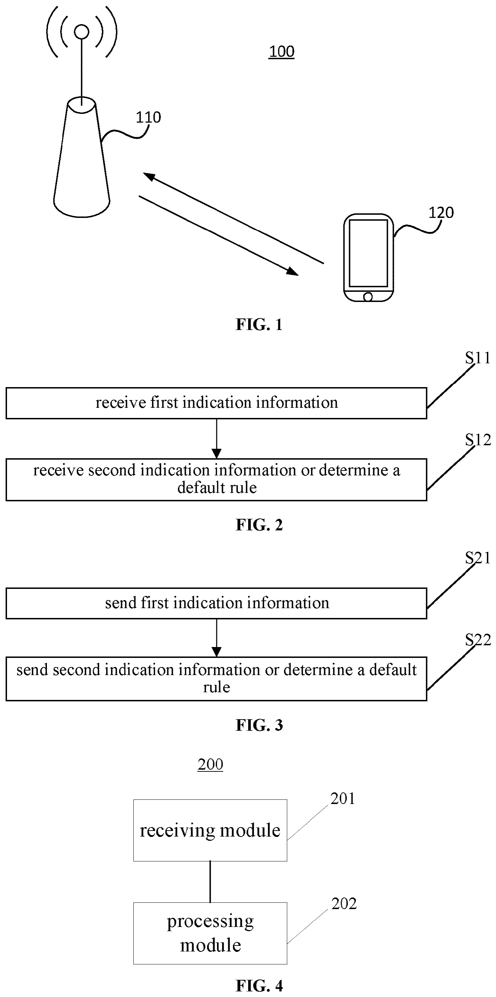

A communication method involved in the disclosure may be applied to a wireless communication system 100 illustrated in FIG. 1. The network system may include a network device 110 and a terminal 120. It is understood that the wireless communication system illustrated in FIG. 1 is only for schematic illustration, and the wireless communication system may also include other network devices, such as a core network device, a wireless relay device and a wireless backhaul device, which are not illustrated in FIG. 1. The embodiments of the disclosure do not limit the number of network devices and terminals included in the wireless communication system.

It may be further understood that the wireless communication system of the embodiments of the disclosure is a network that provides wireless communication functions. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier-frequency division multiple access (SC-FDMA), carrier sense multiple access with collision avoidance. According to the capacity, rate, delay and other factors of different networks, the network may be classified as second generation (2G) network, 3G network, 4G network or future evolution network, such as 5th generation wireless communication system (5G) network, and the 5G network may also be called new radio (NR). For the convenience of description, the disclosure sometimes refers to the wireless communication network as a network.

Furthermore, the network device 110 involved in the disclosure may also be referred to as a wireless access network device. The wireless access network device may be a base station, an evolved node B (eNB), a home base station, an access point (AP) in a wireless fidelity (WI-FI) system, a wireless relay node, a wireless backhaul node, a transmission point (TP) or a transmission reception point (TRP), etc. The wireless access network device may also be a gNB in an NR system or may also be a component or a part of a device constituting a base station. When it is a vehicle-to-everything (V2X) communication system, the network device may also be a vehicle-mounted device. It should be understood that in the embodiments of the disclosure, the specific technology and specific device form adopted by the network device are not limited.

Furthermore, the terminal 120 involved in the disclosure may also be referred to as a terminal device, a user equipment (UE), a mobile station (MS), a mobile terminal (MT), etc., which is a device that provides voice and/or data connectivity to users. For example, the terminal may be a handheld device, a vehicle-mounted device or the like with a wireless connection function. At present, some examples of the terminal are: Mobile Phone, Pocket Personal Computer (PPC), handheld computer, Personal Digital Assistant (PDA), laptop computer, a tablet computer, wearable device, or vehicle-mounted device, etc. In addition, when it is a vehicle-to-everything (V2X) communication system, the terminal may also be a vehicle-mounted device. It should be understood that the embodiments of the disclosure do not limit the specific technology and specific device form adopted by the terminal.

In the embodiments of the disclosure, the network device 110 and the terminal 120 may use any feasible wireless communication technology to achieve mutual data transmission. A transmission channel corresponding to transmitting data by the network device 110 to the terminal 120 is called downlink channel (DL), and a transmission channel corresponding to transmitting data sent by the terminal 120 to the network device 110 is called uplink channel (UL). It may be understood that the network device involved in the embodiments of the disclosure may be a base station. Certainly, the network device may also be any other possible network device and the terminal may be any possible terminal, which is not limited by the disclosure.

In NR, especially when the communication frequency band is in frequency range 2, since high-frequency channels attenuate quickly, beam-based transmission and reception are required to ensure coverage.

In release (Rel)-16, beams used for transmitting the PDCCH and/or the DMRS of the PDCCH, the PDSCH and/or the DMRS of the PDSCH, the PUCCH and/or the DMRS of the PUCCH, the PUSCH and/or the DMRS of the PUSCH, and/or reference signals are all independently indicated. Reference signals may include the CSI-RS, the SRS, the PRS, the TRS, and the like. For example, the CSI-RS may include a CSI-RS for channel state information measurement, a CSI-RS for beam measurement, or a CSI-RS for pathloss estimation. The SRS may include an SRS for codebook-based or non-codebook-based channel state information measurement, an SRS for beam measurement, an SRS for antenna switching, or an SRS for positioning measurement.

Typically, in a conventional method, the transmission(s) of the PDCCH and/or the DMRS of the PDCCH and the transmission(s) of the PUCCH and/or the DMRS of the PUCCH are performed by activating beam(s) via an MAC CE, while the transmission(s) of the PDSCH and/or the DMRS of the PDSCH and the transmission(s) of the PUSCH and/or the DMRS of the PUSCH are performed by indicating beam(s) respectively via DCI signaling.

To reduce signaling overhead, Rel-17 proposes the use of unified TCI state. At present, the unified TCI state may include separate indications for uplink and downlink respectively, such as a DL TCI state and a UL TCI state. The unified TCI state may also be a joint indication for uplink and downlink, such as a joint TCI state. For example, in a case where the network device indicates a DL TCI state for downlink, the DL TCI state may be used for the transmissions of the terminal's PDSCH and/or the DMRS of the PDSCH, the PDCCH and/or the DMRS of the PDCCH, and at least a part of the CSI-RS. The above-mentioned "at least a part of the CSI-RS" may be an aperiodic CSI-RS. As another example, in a case where the network device indicates a UL TCI state for uplink, the UL TCI state may be used for the transmissions of the terminal's PUSCH and/or the DMRS of the PUSCH, the PUCCH and/or the DMRS of the PUCCH, and at least a part of the SRS. As another example, in a case where the network device indicates a joint TCI state, the joint TCI state may be used for the transmissions of uplink and downlink channels at the same time and/or reference signals.

It may be understood that the TCI state may be used to indicate which receiving beam(s) the terminal uses in receiving the PDCCH and/or the DMRS of the PDCCH, and/or the PDSCH and/or the DMRS of the PDSCH, such as receiving beam(s) used by the terminal to receive and corresponding to the sending beam(s) that is/are the same as the sending beam(s) used by the network device to send a synchronization signal and physical broadcast channel block (SSB) or CSI-RS. That is, the DMRS of the PDCCH and/or the PDCCH, and/or the DMRS of the PDSCH and/or the PDSCH are quasi-co-located with the SSB or the CSI-RS. The TCI may also be used to indicate which transmitting beam(s) the terminal uses in sending the PUCCH and/or the DMRS of the PUCCH, and/or the PUSCH and/or the DMRS of the PUSCH, such as the transmitting beam(s) corresponding to the receiving beam(s) that is/are the same as those for receiving which SSB or CSI-RS sent by the network device, or the transmitting beam(s) that is/are the same as those for sending an SRS by the terminal. That is, the PUCCH and/or the DMRS of the PUCCH and/or the PUSCH and/or the DMRS of the PUSCH are quasi co-located with the SSB, the CSI-RS or the SRS. The beam refers to a quasi co-location (QCL) type D.

The beams involved above may be indicated by TCI state or spatialrelationinfo. The TCI state corresponding to the PDCCH includes the TCI state corresponding to the PDCCH and/or the TCI state of the DMRS of the PDCCH. That is, the TCI state is used for the reception of the PDCCH and/or the reception of the DMRS of the PDCCH. Similarly, the TCI state corresponding to the PDSCH includes the TCI state corresponding to the PDSCH and/or the TCI state of the DMRS of the PDSCH. That is, the TCI state is used for the reception of the PDSCH and/or the reception of the DMRS of the PDSCH. The TCI state or spatialrelationinfo corresponding to PUCCH includes the TCI state or spatialrelationinfo corresponding to the PUCCH and/or the TCI state or spatialrelationinfo corresponding to the DMRS of the PUCCH. That is, the TCI state or spatialrelationinfo is used for the transmission of the PUCCH and/or the transmission of the DMRS of the PUCCH. The TCI state or spatialrelationinfo corresponding to the PUSCH includes the TCI state or spatialrelationinfo corresponding to the PUSCH and/or the TCI state or spatialrelationinfo corresponding to the DMRS of the PUSCH. That is, the TCI state or spatialrelationinfo is used for the transmission of the PUSCH and/or the transmission of the DMRS of the PUSCH.

However, currently Rel-17 only considers the unified TCI state for single-TRP. That is, only one set of unified TCI states is considered for beam indication, including, such as, UL TCI state, DL TCI state and/or joint TCI state. In a case that there is a multi-TRP to provide transmission services for the terminal, multiple sets of TCI states will be configured accordingly. In this case, how to indicate multiple sets of unified TCI states has not yet been determined.

For the case of multi-TRP including a single DCI method, among the PDCCH and/or the DMRS of the PDCCH, the PDSCH and/or the DMRS of the PDSCH, the PUCCH and/or the DMRS of the PUCCH, and the PUSCH and/or the DMRS of the PUSCH, if some channels and/or the DMRS of these channels are configured with the multi-TRP, while other channels and/or the DMRS of those channels are configured with the single-TRP, then when the unified TCI state indicates multiple sets of TCI states, it may be necessary to implement dynamic switching between the multi-TRP and the single-TRP for the channels configured with the multi-TRP. Then how to determine which set or sets of TCI states each channel corresponds to requires additional signaling to indicate.

In related arts, the PDCCH uses radio resource control (RRC) signaling to determine which one or more of the multiple TCI states each control resource set (CORESET) or CORESET group is based on to receive PDCCH. The PUCCH also uses the RRC signaling to determine which one or more of the multiple TCI states each PUCCH or PUCCH group is based on to send PUCCH. The PDSCH uses a first indication field of the PDSCH in the DCI to determine which one or more of the multiple TCI states each PDSCH is based on to receive PDSCH. The PUSCH uses a second indication field of the PUSCH in the DCI to determine which one or more of the multiple TCI states each PUSCH is based on to send PUSCH.

However, the PDSCH and the PUSCH may be configured with SFN schemes. For example, the SFN schemes may include SFN scheme A and SFN scheme B.

SFN scheme A indicates that the same transfer block (TB) is transmitted through different TCI states with the same frequency domain resources, the same time domain resources and the DMRS ports of the same CDM group, and the PDSCH/PUSCH has a QCL relationship with parameters in the two TCI states.

SFN scheme B Indicates that the same TB is transmitted through different TCI states with the same frequency domain resources, the same time domain resources and the DMRS ports of the same CDM group, and the PDSCH/PUSCH has/have a QCL relationship with parameters of the two TCI states except for some parameters in the second TCI state. Some parameters in the second TCI state may include Doppler shift or Doppler spread.

When the physical shared channel (such as PDSCH and/or PUSCH) is configured as the SFN scheme, it is also necessary to consider whether the terminal has the capability of supporting a dynamic SFN. Based on the different capabilities of terminals, it is not clear how to configure their unified TCI states and the relationship between the configured multiple sets of TCI states and the physical shared channel.

Therefore, the disclosure provides methods, apparatuses and devices for configuring a transmission configuration indication state and a storage medium. In the case where a physical shared channel is configured with an SFN scheme, one or multiple sets of TCI states corresponding to the physical shared channel are determined through other indication information different from indication information for indicating unified TCI state(s) or a default rule, thereby improving the transmission flexibility of the physical shared channel based on the unified TCI state.

FIG. 2 is a flowchart illustrating a method for configuring a transmission configuration indication state according to an example embodiment. As illustrated in FIG. 2, the method is performed by a terminal and may include the following.

In step S11, first indication information is received.

In some embodiments, the terminal may receive the first indication information. The first indication information is used for determining unified TCI state(s), and the unified TCI state(s) may include N sets of TCI states, where N is a positive integer. It may be understood that N is greater than or equal to 1.

For example, the terminal receives the first indication information sent by the network device. The first indication information may be used for determining the unified TCI state(s). The unified TCI state(s) determined by the first indication information may include at least one set of TCI states, for example, N sets of TCI states.

As another example, the terminal may determine N sets of TCI states by receiving the first indication information multiple times (i.e., multiple pieces of first indication information). For example, a first piece of first indication information that is received firstly indicates 2 sets of TCI states, including a first set of TCI states and a second set of TCI states. A second piece of first indication information that is received secondly may indicate 1 set of TCI states, and the 1 set of TCI states indicated by the second piece of first indication information may be an update of the first set of TCI states among the 2 sets of TCI states indicated by the first piece of first indication information. Then the N sets of TCI states may include only the 1 set of TCI states indicated by the second piece of first indication information or the N sets of TCI states may include the second set of TCI states indicated by the first piece of first indication information and the first set of TCI states indicated by the second piece of first indication information.

It may be understood that in each embodiment of the disclosure, each of the at least one piece of first indication information may indicate K sets of TCI states. The terminal may determine the N sets of TCI states based on the respective K sets of TCI states indicated by each of the at least one piece of first indication information.

Certainly, the set of TCI states indicated by the second piece of first indication information may also be an update of the second set of TCI states among the two sets of TCI states indicated by the first piece of first indication information. It may be understood that the first set of TCI states and/or the second set of TCI states included in the N sets of TCI states should respectively be a latest first set of TCI states and/or a latest second set of TCI states indicated by the multiple pieces of first indication information.

As another example, the first piece of first indication information indicates 1 set of TCI states, for example, corresponding to the first set of TCI states. The second piece of first indication information indicates 1 set of TCI states, for example, corresponding to the second set of TCI states. The N sets of TCI states may include the first set of TCI states and the second set of TCI states respectively indicated by the two pieces of first indication information. It may be understood that the first set of TCI states and the second set of TCI states correspond to different TRPs, correspond to different bit positions contained in the MAC CE, or correspond to other features, which are not limited in the disclosure.

In step S12, second indication information is received, or a default rule is determined.

In some embodiments, the terminal may further receive the second indication information. The second indication information is used for determining one or multiple sets of TCI states corresponding to a physical shared channel among the N sets of TCI states, and the physical shared channel is configured for transmission based on the SFN scheme.

For example, the terminal may also receive the second indication information sent by the network device. The second indication information may be used for determining which one or multiple sets of TCI states of the N sets of TCI states the PDSCH and/or PUSCH corresponds to. As an example, the second indication information is used for determining which one or multiple sets of TCI states of the N sets of TCI states the PDSCH corresponds to. As another example, the second indication information is used for determining which one or multiple sets of TCI states of the N sets of TCI states the PUSCH corresponds to. As still another example, the second indication information is used for determining which one or multiple sets of TCI states of the N sets of TCI states the PDSCH corresponds to and determining which one or multiple sets of TCI states of the N sets of TCI states the PUSCH corresponds to. The above-mentioned "N sets of TCI states" are the N sets of TCI states determined based on the first indication information.

It may be understood that the terminal may transmit the corresponding physical shared channel based on the TCI states determined by the second indication information.

In some embodiments, the terminal may further determine the default rule. The default rule may be used for determining one or multiple sets of TCI states corresponding to the physical shared channel among the N sets of TCI states. The physical shared channel is configured for transmission based on the SFN scheme.

For example, in the case where the terminal does not receive the second indication information, it may also be considered that the second indication information is not configured in the DCI received by the terminal. In this case, the terminal may determine the default rule and determine, based on the default rule, which one or multiple sets of TCI states of the N sets of TCI states the PDSCH and/or PUSCH correspond to. As an example, the terminal determines which one or multiple sets of TCI states of the N sets of TCI states the PDSCH corresponds to. As another example, the terminal determines which one or multiple sets of TCI states of the N sets of TCI states the PUSCH corresponds to. As still another example, the terminal determines which one or multiple sets of TCI states of the N sets of TCI states the PDSCH corresponds to and determines which one or multiple sets of TCI states of the N sets of TCI states the PUSCH corresponds to. The above-mentioned "N sets of TCI states" are the N sets of TCI states determined based on the first indication information.

In the case where the physical shared channel is configured with an SFN scheme, in the disclosure, the one or multiple sets of TCI states corresponding to the physical shared channel are determined through other indication information different from indication information for indicating the unified TCI state(s) or through the default rule, thereby improving the transmission flexibility of the physical shared channel based on the unified TCI state(s).

In the method for configuring the transmission configuration indication state according to the embodiments of the disclosure, in the case where the terminal supports the dynamic switching between the single TRP scheme and the SFN scheme, the second indication information is used for determining one or multiple sets of TCI states corresponding to the physical shared channel among N sets of TCI states. The terminal transmits the physical shared channel based on the one or multiple sets of TCI states.

In some embodiments, in the case where the terminal supports the dynamic switching between the single TRP scheme and the SFN scheme, the second indication information may be used for determining one set of TCI states or multiple sets of TCI states corresponding to the physical shared channel among the N sets of TCI states. The terminal may transmit the corresponding physical shared channel based on the set of TCI states or the multiple sets of TCI states determined by the second indication information.

For instance, the terminal supports the dynamic switching, that is, the terminal supports the dynamic SFN. For example, the terminal may report dynamic switching SFNschemeA (sfn-SchemeA-DynamicSwitching) and/or dynamic switching SFNschemeB (sfn-SchemeB-DynamicSwitching). It may be understood that if the terminal reports the above capabilities, then the terminal is able to dynamically switch between the single TRP scheme and the SFN scheme to transmit the physical shared channel. The SFN scheme is to transmit the physical shared channel based on multiple sets of TCI states. The single TRP is to transmit the physical shared channel based on a single set of TCI states. "The terminal reports the above capabilities" may be understood as that the terminal sends capability information containing the above capabilities to the network device.

For example, in the case where the terminal supports the dynamic switching between the single TRP scheme and the SFN scheme, the second indication information may be used for determining one set of TC states or multiple sets of TCI states corresponding to the PDSCH among the N sets of TCI states. The terminal may transmit the PDSCH based on the one set of TCI states or the multiple sets of TCI states determined by the second indication information. As another example, in the case that the terminal supports the dynamic switching between the single TRP scheme and the SFN scheme, the second indication information may be used for determining one set of TCI states or multiple sets of TCI states corresponding to the PUSCH among the N sets of TCI states. The terminal may transmit the PUSCH based on the one set of TCI states or the multiple sets of TCI states determined by the second indication information.

In some embodiments, the terminal may determine to switch from the SFN scheme to the single TRP scheme based on the DCI. The DCI may be the first indication information. In some cases, the DCI may also be the second indication information. Certainly, the DCI may also be other indication information other than the first indication information and the second indication information.

In some embodiments, in the case where the second indication information is a DCI, the second indication information may include a TCI selection field. The TCI selection field may be used for determining an association relationship between the physical shared channel and the N sets of TCI states determined based on the first indication information. Or the TCI selection field may indicate which one or multiple sets of TCI states are selected from the N sets of TCI states determined based on the first indication information, for transmitting the physical shared channel.

The disclosure may be applicable to scenarios where the terminal supports the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring a transmission configuration indication state according to the embodiments of the disclosure, in the case where the terminal does not support the dynamic switching between the single TRP scheme and the SFN scheme, the second indication information is used for determining multiple sets of TCI states corresponding to the physical shared channel among the N sets of TCI states. The terminal transmits the physical shared channel based on the multiple sets of TCI states.

In some embodiments, in the case where the terminal does not support the dynamic switching between the single TRP scheme and the SFN scheme, the second indication information may be used for determining multiple sets of TCI states corresponding to the physical shared channel among the N sets of TCI states. The terminal may transmit the corresponding physical shared channel based on the multiple sets of TCI states determined by the second indication information.

For example, the terminal does not support the dynamic switching, that is, the terminal does not support the dynamic SFN. It may be understood that "the terminal does not support the dynamic SFN" means that the terminal cannot dynamically switch from the SFN scheme to the single TRP scheme to transmit the physical shared channel. In other words, the terminal cannot dynamically switch between the SFN scheme and the single TRP scheme based on the DCI. For the terminal, the physical shared channel may only be transmitted based on the multiple sets of TCI states.

Obviously, in the above case, the second indication information received by the terminal must be used for determining the association relationship between the physical shared channel and the multiple sets of TCI states. It may also be understood that the terminal does not expect to receive the second indication information used for determining the association relationship between the physical shared channel and one set of TCI states. This means that the terminal does not expect the network device to send the second indication information used for determining the association relationship between the physical shared channel and one set of TCI states. It may be considered that if the network device sends the second indication information used for determining the association relationship between the physical shared channel and one set of TCI states, the terminal may choose not to receive it or discard it after receiving it.

As an example, in the case where the terminal does not support the dynamic switching between the single TRP scheme and the SFN scheme, the second indication information may be used for determining the multiple sets of TCI states corresponding to the PDSCH among the N sets of TCI states. The terminal may transmit the PDSCH based on the multiple sets of TCI states determined by the second indication information. As another example, in the case where the terminal does not support the dynamic switching between the single TRP scheme and the SFN scheme, the second indication information may be used for determining the multiple sets of TCI states corresponding to the PUSCH among the N sets of TCI states. The terminal may transmit the PUSCH based on the multiple sets of TCI states determined by the second indication information.

The disclosure may be applicable to scenarios where the terminal does not support the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, in the case where the terminal does not support the dynamic switching between the single TRP scheme and the SFN scheme and where the second indication information is not configured in the DCI, multiple sets of TCI states corresponding to the physical shared channel are determined among the N sets of TCI states based on the default rule. The terminal transmits the physical shared channel based on the multiple sets of TCI states.

In some embodiments, in the case where the terminal does not support the dynamic switching between the single TRP scheme and the SFN scheme and where the second indication information is not configured in the DCI, the terminal may determine multiple sets of TCI states corresponding to the physical shared channel among the N sets of TCI states based on the default rule and use the determined multiple sets of TCI states to transmit the corresponding physical shared channel.

For example, the terminal does not support the dynamic switching, that is, the terminal does not support the dynamic SFN. In this case, the terminal may transmit the physical shared channel without the dynamically indicated switching. Therefore, the second indication information may not be required for the terminal. The terminal directly determines the multiple sets of TCI states for transmitting the physical shared channel based on the default rule and transmits the physical shared channel based on the multiple sets of TCI states determined by the default rule.

The default rule may be stipulated in the protocol or may be preset, which is not limited in the disclosure.

The disclosure may be applicable to scenarios where the terminal does not support the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, N is a positive integer greater than or equal to 1.

In some embodiments, N is a positive integer greater than or equal to 1.

For example, in the case where the terminal supports the dynamic switching between the single TRP scheme and the SFN scheme, the first indication information received by the terminal may be used for determining one set of TCI states or multiple sets of TCI states.

For instance, in the case where the terminal supports the dynamic switching between the single TRP scheme and the SFN scheme, the terminal may receive first indication information multiple times (i.e., multiple pieces of first indication information). A first piece of first indication information that is firstly received indicates one set of TCI states, such as the first set of TCI states. A second piece of first indication information that is secondly received indicates one set of TCI states, such as the second set of TCI states. The terminal may determine the N sets of TCI states based on the first set of TCI states and the second set of TCI states indicated by the two pieces of first indication information respectively. That is, the N sets of TCI states include the first set of TCI states and the second set of TCI states.

As another example, in the case where the terminal supports the dynamic switching between the single TRP scheme and the SFN scheme, the terminal may receive first indication information multiple times (i.e., multiple pieces of first indication information). At least one piece of first indication information each includes N sets of TCI states, and the remaining pieces of first indication information may each indicate some TCI states in the N sets of TCI states. For example, the remaining pieces of first indication information may each be used for updating some TCI states in the N sets of TCI states.

As another example, in the case where the terminal supports the dynamic switching between the single TRP scheme and the SFN scheme, the terminal may receive first indication information multiple times (i.e., multiple pieces of first indication information). A first piece of first indication information that is firstly received indicates 2 sets of TCI states, such as the first set of TCI states and the second set of TCI states. The second piece of first indication information that is secondly received indicates 2 sets of TCI states, such as the first set of TCI states and the third set of TCI states. It may be considered that the first set of TCI states indicated by the second piece of first indication information is used for updating the first set of TCI states indicated by the first piece of first indication information. Therefore, the terminal may determine the N sets of TCI states based on the TCI states indicated respectively by the two pieces of first indication information. That is, the N sets of TCI states include the first set of TCI states indicated by the second piece of first indication information, the second set of TCI states indicated by the first piece of first indication message and the third set of TCI states indicated by the second piece of first indication information.

It may be understood that in each embodiment of the disclosure, different pieces of first indication information in multiple pieces of first indication information may respectively indicate different numbers of TCI states, and the TCI states indicated by different pieces of first indication information may also be different. In other words, the N sets of TCI states may be jointly determined based on the multiple pieces of first indication information. If a set of TCI states is indicated by a certain piece of first indication information and the same set of TCI states is indicated again by another piece of first indication information received after the certain piece of first indication information, then it may be considered that the later received first indication information has updated the TCI states of the earlier received first indication information.

As another example, in the case where the terminal does not support the dynamic switching between the single TRP scheme and the SFN scheme, the first indication information received by the terminal may be used for determining one set of TCI states or multiple sets of TCI states.

For example, in the case where the terminal does not support the dynamic switching between the single TRP scheme and the SFN scheme, the terminal may receive first indication information multiple times (i.e., multiple pieces of first indication information). A first piece of first indication information that is received firstly indicates one set of TCI states, such as the first set of TCI states. A second piece of first indication message that is received secondly indicates one set of TCI states, such as the second set of TCI states. The terminal may determine the N sets of TCI states based on the first set of TCI states and the second set of TCI states indicated respectively by the two pieces of first indication information. That is, the N sets of TCI states include the first set of TCI states and the second set of TCI states.

As another example, in the case where the terminal does not support the dynamic switching between the single TRP scheme and the SFN scheme, the terminal may receive first indication information multiple times (i.e., multiple pieces of first indication information). At least one piece of first indication information each includes N sets of TCI states, and the remaining pieces of first indication information may each indicate some TCI states in the N sets of TCI states. For example, the remaining pieces of first indication information may each be used for updating some TCI states in the N sets of TCI states.

As another example, in the case where the terminal does not support the dynamic switching between the single TRP scheme and the SFN scheme, the terminal may receive first indication information multiple times (i.e., multiple pieces of first indication information). A first piece of first indication information that is received firstly indicates two sets of TCI states, such as the first set of TCI states and the second set of TCI states. A second piece of first indication information that is received secondly indicates two sets of TCI states, such as the first set of TCI states and the third set of TCI states. It may be considered that the first set of TCI states indicated by the second piece of first indication information is an update of the first set of TCI states indicated by the first piece of first indication information. Therefore, the terminal may determine the N sets of TCI states based on the TCI states respectively indicated by the two pieces of first indication information. That is, the N sets of TCI states include the first set of TCI states determined by the second piece of first indication information, the second set of TCI states indicated by the first piece of first indication information and the third set of TCI states indicated by the second piece of first indication message.

In some embodiments, the second indication information may be used for determining the association relationship between the physical shared channel and the N sets of TCI states based on the N sets of TCI states determined by each piece of first indication information. In other embodiments, the second indication information may be used for determining the association relationship between the physical shared channel and the determined N sets of TCI states based on a value of N determined by a piece of first indication information with a largest value of N among the multiple pieces of first indication information.

In some embodiments, the first indication information may be a MAC CE. In other embodiments, the first indication information may also be a DCI.

The disclosure is applicable to scenarios where the terminal supports or does not support the dynamic switching, and the first indication information may indicate one or multiple sets of TCI states, such that one or multiple sets of TCI states corresponding to the physical shared channel may be determined through the second indication information or the default rule in the case where the physical shared channel is configured with the SFN scheme, thereby improving the transmission flexibility of the physical shared channel based on the unified TCI state(s).

In the method for configuring the transmission configuration indication state according to the embodiments of the disclosure, N is a positive integer greater than 1.

In some embodiments, N is a positive integer greater than 1.

For example, in the case where the terminal does not support the dynamic switching between the single TRP scheme and the SFN scheme, the first indication information received by the terminal may be used for determining multiple sets of TCI states.

For example, in the case where the terminal does not support the dynamic switching between the single TRP scheme and the SFN scheme, the terminal may receive first indication information once or multiple times (i.e., one piece of first indication information or multiple pieces of first indication information). The terminal determines the multiple sets of TCI states through the one piece of first indication information or the multiple pieces of first indication information.

As an example, the terminal may receive first indication information multiple times (i.e., multiple pieces of first indication information). A first piece of first indication information that is received firstly indicates one set of TCI states, such as the first set of TCI states. A second piece of first indication information that is received secondly indicates one set of TCI states, such as the second set of TCI states. The terminal may determine the N sets of TCI states based on the first set of TCI states and the second set of TCI states indicated respectively by the two pieces of first indication information. That is, the N sets of TCI states include the first set of TCI states and the second set of TCI states.

As another example, the terminal may receive first indication information multiple times (i.e., multiple pieces of first indication information). At least one piece of first indication information each includes N sets of TCI states, and the remaining pieces of first indication information may each indicate some TCI states in the N sets of TCI states. For example, the remaining pieces of first indication information may each be used for updating some TCI states in the N sets of TCI states.

As another example, in the case where the terminal does not support the dynamic switching between the single TRP scheme and the SFN scheme, the terminal may receive first indication information multiple times (i.e., multiple pieces of first indication information). A first piece of first indication information that is received firstly indicates two sets of TCI states, such as the first set of TCI states and the second set of TCI states. A second piece of first indication information that is received secondly indicates two sets of TCI states, such as the first set of TCI states and the third set of TCI states. It may be considered that the first set of TCI states indicated by the second piece of first indication information is used for updating the first set of TCI states indicated by the first piece of first indication information. Therefore, the terminal may determine the N sets of TCI states based on the TCI states indicated respectively by the two pieces of first indication information. That is, the N sets of TCI states include the first set of TCI states determined by the second piece of first indication information, the second set of TCI states indicated by the first piece of first indication information and the third set of TCI states indicated by the second piece of first indication information.

It may be understood that in each embodiment of the disclosure, different pieces of first indication information in the multiple pieces of first indication information may respectively indicate different numbers of TCI states, and the TCI states indicated by the different pieces of first indication information may also be different. In other words, the N sets of TCI states may be jointly determined based on the multiple pieces of first indication information. If a set of TCI states is indicated by a certain piece of first indication information and the same set of TCI states is indicated again by another piece of first indication information received after the certain piece of first indication information, then it may be considered that the later received first indication information has updated the TCI states of the earlier received first indication information.

Certainly, in the case where the first indication information indicates one set of TCI states, it is necessary to ensure that one piece of first indication information for indicating multiple sets of TCI states is also received once or one piece of first indication information for indicating other TCI states different from the above one set of TCI states is also received once. In other words, the terminal needs to determine multiple sets of TCI states through one or more pieces of first indication information.

In some embodiments, the second indication information may be used for determining the association relationship between the physical shared channel and the N sets of TCI states based on the N sets of TCI states determined by each piece of first indication information. In other embodiments, the second indication information may be used for determining the association relationship between the physical shared channel and the determined N sets of TCI states based on a value of N determined by a piece of first indication information with a largest value of N among the multiple pieces of first indication information.

In some embodiments, the first indication information may be a MAC CE. In other embodiments, the first indication information may be a DCI.

The disclosure is applicable to scenarios where the terminal does not support the dynamic switching, and the first indication information may be used for determining multiple sets of TCI states, such that one or multiple sets of TCI states corresponding to the physical shared channel may be determined through the second indication information or the default rule in the case where the physical shared channel is configured with the SFN scheme, thereby improving the transmission flexibility of the physical shared channel based on the unified TCI state(s).

In the method for configuring the transmission configuration indication state according to the embodiments of the disclosure, the SFN scheme includes at least one of SFNschemeA or SFNschemeB.

In some embodiments, the SFN scheme includes the SFNschemeA.

In some embodiments, the SFN scheme includes the SFNschemeB.

In some embodiments, the SFN scheme includes the SFNschemeA and the SFNschemeB.

The disclosure is applicable to a variety of SFN scenarios. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, the receiving of the first indication information in S11 may include receiving at least one piece of first indication information. Each of the at least one piece of first indication information indicates K sets of TCI states, and the values of K corresponding to different pieces of first indication information are the same or different, where K is a positive integer. The N sets of TCI states are determined based on the K sets of TCI states indicated by a first specified piece of first indication information, and the first specified piece of first indication information is included in the at least one piece of first indication information. Or the N sets of TCI states are determined based on the K sets of TCI states indicated by each of the multiple pieces of first indication information.

In some embodiments, the terminal may receive one or more pieces of first indication information sent by the network device. Each piece of first indication information received by the terminal may indicate the K sets of TCI states. It may be understood that values of K corresponding to different pieces of first indication information may be the same or different, where K is a positive integer.

As an example, the terminal may receive one piece of first indication information sent by the network device, and this first indication information indicates K1 sets of TCI states. As another example, the terminal may receive multiple pieces of first indication information sent by the network device, such as two pieces of first indication information. One of the two pieces of first indication information indicates K2 sets of TCI states, and the other one indicates K3 sets of TCI states. It may be understood that the value of K2 and the value of K3 may be the same or different.

In some embodiments, the N sets of TCI states may be determined based on the K sets of TCI states indicated by a first specified piece of first indication information, and the first specified piece of first indication information is indicated in the at least one piece of first indication information.

It may be understood that the terminal may determine the N sets of TCI states based on the K sets of TCI states indicated by the first specified piece of first indication information among the multiple pieces of first indication information.

For example, the terminal may determine the N sets of TCI states based on the K sets of TCI states indicated by the first specified piece of first indication information. The first specified piece of first indication information is a certain piece of first indication information among the at least one piece of first indication information received by the terminal.

Here, K may be the same as or different from N.

In some embodiments, the N sets of TCI states are determined based on multiple K sets of TCI states indicated by the multiple pieces of first indication information.

It may be understood that the terminal may determine the N sets of TCI states based on multiple K sets of TCI states indicated by the multiple pieces of first indication information.

As an example, assuming that the multiple pieces of first indication information are two pieces of first indication information, the terminal may determine the N sets of TCI states based on the K1 sets of TCI states indicated by the first piece of first indication information and the K2 sets of TCI states indicated by the second piece of first indication information. K1 may be the same as or different from N, and K2 may be the same as or different from N. For instance, the first piece of first indication information indicates the first set of TCI states and the second set of TCI states, and the second piece of first indication information indicates the first set of TCI states and the third set of TCI states. It may be considered that the first set of TCI states indicated by the second piece of first indication information is used for updating the first set of TCI states indicated by the first piece of first indication information. The terminal determines that the N sets of TCI states include the updated first set of TCI states, the second set of TCI states and the third set of TCI states based on the first piece of first indication information and the second piece of first indication information.

Certainly, the above example only schematically describes the case where the value of K1 and the value of K2 are the same. In other examples, K1 may be different from K2. For instance, the first piece of first indication information indicates a first set of TCI states, a second set of TCI states and a third set of TCI states, while the second piece of first indication information indicates a fourth set of TCI states and a fifth set of TCI states. The terminal determines that the N sets of TCI states include the first set of TCI states, the second set of TCI states, the third set of TCI states, the fourth set of TCI states and the fifth set of TCI states based on the first piece of first indication information and the second piece of first indication information.

As another example, the first piece of first indication information indicates a first set of TCI states and a second set of TCI states, and the second piece of first indication information indicates an updated second set of TCI states. Based on the first piece of first indication information and the second piece of first indication information, the terminal determines that the N sets of TCI states include the first set of TCI states indicated by the first piece of first indication information and the updated second set of TCI states indicated by the second piece of first indication information.

It may be understood that the disclosure does not limit K1 and K2.

The disclosure provides multiple ways of determining the N sets of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, in the case where the N sets of TCI states are determined based on the K sets of TCI states indicated by the first specified piece of first indication information, the first specified piece of first indication information is the most recently received first indication information.

In some embodiments, in the case where the N sets of TCI states are determined based on the K sets of TCI states indicated by first specified piece of first indication information, the first specified piece of first indication information may be the first indication information that is most recently received by the terminal.

For instance, the terminal may determine the N sets of TCI states based on the K sets of TCI states indicated by the most recently received first indication information. It may be understood that the first indication information that is most recently received by the terminal may be the last first indication information that is received by the terminal at or before the current moment.

It may be understood that for the K sets of TCI states indicated by the first indication information that is most recently received by the terminal, the value of K may be the same as the value of N, or the value of K may be different from the value of N, for example, smaller than the value of N.

It may be understood that the value of N for the N sets of TCI states determined by the terminal may be determined based on a maximum K value or may be determined based on values of K corresponding to different pieces of first indication information, which is not limited in the disclosure.

In the disclosure, the N sets of TCI states are determined through the most recently received first indication information, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, in the case where the N sets of TCI states are determined based on the K sets of TCI states indicated by multiple pieces of first indication information, the multiple pieces of first indication information include a first specified piece of first indication information and a second specified piece of first indication information. The first specified piece of first indication information is a piece of first indication information that is received most recently. The second specified piece of first indication information is a piece of first indication information before the first specified piece of first indication information. At least one set of TCI states in the second specified piece of first indication information is not updated in the first specified piece of first indication information.

In some embodiments, the terminal may determine the N sets of TCI states based on the multiple K sets of TCI states indicated by the multiple pieces of first indication information. The multiple pieces of first indication information may include a first specified piece of first indication information and a second specified piece of first indication information.

In some embodiments, the first specified piece of first indication information may be a piece of first indication information that is most recently received by the terminal. The second specified piece of first indication information may be a piece of first indication information received by the terminal before the first piece of first indication information, and at least one set of TCI states in the second specified piece of first indication information may not be updated in the first specified piece of first indication information. That is, the first specified piece of first indication information may not include the at least one set of TCI states of the second specified piece of first indication information.

For example, the terminal first receives the second specified piece of first indication information, and the second specified piece of first indication information includes the first set of TCI states and the second set of TCI states. Then, the terminal receives the first specified piece of first indication information. The first specified piece of first indication information includes the second set of TCI states, or the first specified piece of first indication information includes the third set of TCI states and the fourth set of TCI states. That is, at least one set of TCI states included in the second specified piece of first indication information should not be included in the first specified piece of first indication information.

If a certain TCI state included in the first specified piece of first indication information is one of the TCI states included in the second specified piece of first indication information, it may be considered that the first specified piece of first indication information updates the TCI state in the second specified piece of first indication information.

In the disclosure, the N sets of TCI states are determined based on the multiple pieces of first indication information, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, the first indication information is carried by a first MAC CE, and the first MAC CE indicates K sets of TCI states. The K sets of TCI states correspond to a codepoint of a TCI state field in a first DCI.

In some embodiments, the first indication information may be carried by the first MAC CE. The first MAC CE may indicate the K sets of TCI states. The K sets of TCI states may correspond to a codepoint in the TCI state field in the first DCI. In this case, there is no need to use the TCI state field of the first DCI to further indicate the codepoint.

It may be understood that if K is greater than 1, more than one TCI state must be activated for each codepoint. For example, the terminal does not support the dynamic switching between the single TRP scheme and the SFN scheme.

In the case where K is greater than or equal to 1, the number of TCI states activated for each codepoint may be greater than or equal to 1. For example, the terminal supports the dynamic switching between the single TRP scheme and the SFN scheme, or the terminal does not support the dynamic switching between the single TRP scheme and the SFN scheme. In the case that the terminal does not support the dynamic switching between the single TRP scheme and the SFN scheme, there may be one codepoint corresponding to multiple sets of TCI states, and the remaining codepoints may be used for updating one or more of the multiple sets of TCI states. If a set of TCI states is not updated, then the terminal continues to use the old TCI state for transmitting the physical shared channel.

In the disclosure, the TCI states are determined through the first indication information carried in the MAC CE, such that in the case where the physical shared channel is configured with the SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, the second indication information is carried by the second MAC CE and the second DCI. The second MAC CE indicates multiple K sets of TCI states respectively corresponding to multiple codepoints for the TCI state field in the second DCI, and the TCI state field in the second DCI indicates one codepoint among the multiple codepoints.

In some embodiments, the first indication information may be carried by a second MAC CE and a second DCI. The second MAC CE may indicate multiple K sets of TCI states. It may be understood that each K sets of TCI states corresponds to a respective codepoint. In other words, the second MAC CE indicates multiple K sets of TCI states corresponding to multiple codepoints. The TCI state field in the second DCI indicates a codepoint among the multiple codepoints, to further indicate specific K sets of TCI states among the multiple K sets of TCI states.

It may be understood that in the multiple K sets of TCI states corresponding to multiple codepoints, the values of K may be the same or different.

It may be understood that if K is greater than 1, the number of TCI states activated for each codepoint must be greater than 1 and for example the terminal does not support the dynamic switching between the single TRP scheme and the SFN scheme.

In the case where K is greater than or equal to 1, the number of TCI states activated for each codepoint may be greater than or equal to 1 and for example the terminal supports the dynamic switching between the single TRP scheme and the SFN scheme, or the terminal does not support the dynamic switching between the single TRP scheme and the SFN scheme. In the case where the terminal does not support the dynamic switching between the single TRP scheme and the SFN scheme, there may be one codepoint corresponding to multiple sets of TCI states, and the remaining codepoints may be used for updating one or more of the multiple sets of TCI states. If a set of TCI states is not updated, then the terminal continues to use the old TCI state for physical shared channel transmission.

In the disclosure, the TCI states are indicated through the second indication information carried in the MAC CE and DCI, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, each set of TCI states includes at least one of: a UL TCI state and/or a DL TCI state, or a joint TCI state.

In some embodiments, each set of TCI states may include a UL TCI state and/or a DL TCI state.

As an example, a set of TCI states may include a UL TCI state. As another example, a set of TCI states may include a DL TCI state. As still another example, a set of TCI states may include a UL TCI state and a DL TCI state.

In some embodiments, each set of TCI states may include a joint TCI state.

It may be understood that the joint TCI state may be used for jointly indicating the uplink TCI state and the downlink TCI state at the same time.

The disclosure provides multiple expressions for a set of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on a unified TCI state(s).

In the method for configuring the transmission configuration indication state according to the embodiments of the disclosure, the physical shared channel includes at least one of: a PUSCH or a PDSCH.

In some embodiments, the physical shared channel includes a PUSCH.

For example, the terminal may determine the association relationship between the PUSCH and the N sets of TCI states based on a TCI selection field of the second indication information.

In some embodiments, the physical shared channel includes a PDSCH.

For example, the terminal may determine the association relationship between the PDSCH and the N sets of TCI states based on a TCI selection field of the second indication information.

In some embodiments, the physical shared channel includes a PUSCH and a PDSCH.

For example, the terminal may determine the relationship between the PUSCH and the N sets of TCI states and determine the association relationship between the PDSCH and the N sets of TCI states based on a TCI selection field of the second indication information.

The disclosure is applicable to kinds of physical shared channels, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

Based on the same concept, the disclosure also provides a method for configuring a TCI state on the network device side.

FIG. 3 is a flowchart illustrating another method for configuring a transmission configuration indication state according to an example embodiment. As illustrated in FIG. 3, the method is performed by a network device and may include the following.

In step S21, first indication information is sent.

In some embodiments, the network device may send the first indication information. The first indication information is used for determining unified TCI state(s), and the unified TCI state(s) may include N sets of TCI states. where N is a positive integer. It may be understood that N is greater than or equal to 1.

For example, the network device sends the first indication information to the terminal. The first indication information may be used by the terminal to determine the unified TCI state(s). The unified TCI state(s) determined by the first indication information may include at least one set of TCI states, for example, N sets of TCI states.

As another example, the network device may determine N sets of TCI states by sending multiple pieces of first indication information. For example, a first piece of first indication information that is sent firstly indicates two sets of TCI states, including a first set of TCI states and a second set of TCI states. A second piece of first indication information that is sent secondly may indicate one set of TCI states, and the one set of TCI states indicated by the second piece of first indication information may be an update of the first set of TCI states among the two sets of TCI states indicated by the first piece of first indication information. Then the N sets of TCI states may include only the one set of TCI states indicated by the second piece of first indication information. Or the N sets of the TCI states may include the second set of TCI states indicated by the first piece of first indication information and the first set of TCI states indicated by the second piece of first indication information.

Certainly, the set of TCI states indicated by the second piece of first indication information may also be an update of the second set of TCI states among the two sets of TCI states indicated by the first piece of first indication information. It may be understood that the first set of TCI states and/or the second set of TCI states included in the N sets of TCI states should respectively be a latest first set of TCI states and/or a latest second set of TCI states indicated by multiple pieces of first indication information.

As another example, the first piece of first indication information indicates 1 set of TCI states, for example, corresponding to the first set of TCI states. The second piece of first indication information indicates 1 set of TCI states, for example, corresponding to the second set of TCI states. The N sets of TCI states may include the first set of TCI states and the second set of TCI states respectively indicated by the two pieces of first indication information. It may be understood that the first set of TCI states and the second set of TCI states may correspond to different TRPs, correspond to different bit positions included in the MAC CE, or correspond to other features, which are not limited in the disclosure.

In step S22, second indication information is sent, or a default rule is determined.

In some embodiments, the network device may further send the second indication information. The second indication information is used for determining one or multiple sets of TCI states corresponding to a physical shared channel among the N sets of TCI states, and the physical shared channel is configured for transmission based on the SFN scheme.

For example, the network device may also send the second indication information to the terminal. The second indication information may be used for determining which one or multiple sets of TCI states of the N sets of TCI states the PDSCH and/or PUSCH corresponds to. As an example, the second indication information may be used for determining which one or multiple sets of TCI states of the N sets of TCI states the PDSCH corresponds to. As another example, the second indication information may be used for determining which one or multiple sets of TCI states of the N sets of TCI states the PUSCH corresponds to. As still another example, the second indication information may be used for determining which one or multiple sets of TCI states of the N sets of TCI states the PDSCH corresponds to and determining which one or multiple sets of TCI states of the N sets of TCI states the PUSCH corresponds to. The above-mentioned "N sets of TCI states" are the N sets of TCI states determined based on the first indication information.

It may be understood that the network device may transmit the corresponding physical shared channel based on the TCI states determined by the second indication information sent.

In some embodiments, the network device may further determine a default rule. The default rule may be used for determining one or multiple sets of TCI states corresponding to the physical shared channel among the N sets of TCI states. The physical shared channel is configured for transmission based on the SFN scheme.

For example, in the case where the network device does not send the second indication information, it may also be considered that the second indication information is not configured in the DCI sent by the network device. In this case, the network device may determine the default rule and determine, based on the default rule, which one or multiple sets of TCI states of the N sets of TCI states the PDSCH and/or PUSCH corresponds to. As an example, the terminal determines which one or multiple sets of TCI states of the N sets of TCI states the PDSCH corresponds to. As another example, the terminal determines which one or multiple sets of TCI states of the N sets of TCI states the PUSCH corresponds to. As still another example, the terminal determines which one or multiple sets of TCI states of the N sets of TCI states the PDSCH corresponds to and determines which one or multiple sets of TCI states of the N sets of TCI states the PUSCH corresponds to. The above-mentioned "N sets of TCI states" are the N sets of TCI states determined based on the first indication information.

In the case where the physical shared channel is configured with an SFN scheme, in the disclosure, the one or multiple sets of TCI states corresponding to the physical shared channel are determined through other indication information different from indication information for indicating the unified TCI state(s) or the through default rule, thereby improving the transmission flexibility of the physical shared channel based on the unified TCI state(s).

In the method for configuring the transmission configuration indication state according to the embodiments of the disclosure, in the case where the terminal supports the dynamic switching between the single TRP scheme and the SFN scheme, the second indication information is used for determining one or multiple sets of TCI states corresponding to the physical shared channel among the N sets of TCI states. The terminal transmits the physical shared channel based on the one or multiple sets of TCI states.

In some embodiments, in the case where the terminal supports the dynamic switching between the single TRP scheme and the SFN scheme, the second indication information may be used for determining one set of TCI states or multiple sets of TCI states corresponding to the physical shared channel among the N sets of TCI states. The terminal may transmit the corresponding physical shared channel based on the set of TCI states or the multiple sets of TCI states determined by the second indication information.

For instance, the terminal supports the dynamic switching, that is, the terminal supports the dynamic SFN. For example, the terminal may report sfn-SchemeA-DynamicSwitching and/or sfn-SchemeB-DynamicSwitching. It may be understood that if the terminal reports the above capabilities, then the terminal is able to dynamically switch between the single TRP scheme and the SFN scheme to transmit the physical shared channel. The SFN scheme is to transmit the physical shared channel based on the multiple sets of TCI states, and the single TRP is to transmit physical shared channel based on a single set of TCI states. "The terminal reports the above capabilities" may be understood as that the terminal sends capability information containing the above capabilities to the network device. In other words, the network device receives the capability information sent by the terminal to determine whether the terminal has the above capabilities.

For example, in the case where the terminal supports the dynamic switching between the single TRP scheme and the SFN scheme, the second indication information may be used for determining one set of TCI states or more sets of TCI states corresponding to the PDSCH among the N sets of TCI states. The network device may transmit the PDSCH to the terminal through the one set of TCI states or the multiple sets of TCI states determined by the second indication information. As another example, in the case where the terminal supports the dynamic switching between the single TRP scheme and the SFN scheme, the second indication information may be used for determining one set of TCI states or multiple sets of TCI states corresponding to the PUSCH among the N sets of TCI states. The network device may transmit PUSCH to the terminal based on the one set of TCI states or the multiple sets of TCI states determined by the second indication information.

In some embodiments, the network device may instruct, based on the DCI, the terminal to determine to switch from the SFN scheme to the single TRP scheme. The DCI may be the first indication information. In some cases, the DCI may also be the second indication information. Certainly, the DCI may also be other indication information other than the first indication information and the second indication information.

In some embodiments, in the case where the second indication information is a DCI, the second indication information may include a TCI selection field. The TCI selection field may be used for determining an association relationship between the physical shared channel and the N sets of TCI states determined based on the first indication information. Or the TCI selection field indicates which one or multiple sets of TCI states are selected from the N sets of TCI states determined based on the first indication information, for transmission of the physical shared channel.

The disclosure may be applicable to scenarios where the terminal supports the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, in the case where the terminal does not support the dynamic switching between the single TRP scheme and the SFN scheme, the second indication information is used for determining multiple sets of TCI states corresponding to the physical shared channel among the N sets of TCI states. The terminal transmits the physical shared channel based on the multiple sets of TCI states.

In some embodiments, in the case where the terminal does not support the dynamic switching between the single TRP scheme and the SFN scheme, the second indication information can be used for determining multiple sets of TCI states corresponding to the physical shared channel among the N sets of TCI states. The network device may transmit the corresponding physical shared channel with the terminal based on the multiple sets of TCI states determined by the second indication information.

For example, the terminal does not support the dynamic switching, that is, the terminal does not support the dynamic SFN. It may be understood that "the terminal does not support the dynamic SFN" means that the terminal cannot dynamically switch from the SFN scheme to the single TRP scheme to transmit the physical shared channel. In other words, the terminal cannot dynamically switch between the SFN scheme and the single TRP scheme based on the DCI. For the terminal, the physical shared channel may only be transmitted based on the multiple sets of TCI states.

Obviously, in the above case, the second indication information sent by the network device must be used for determining the association relationship between the physical shared channel and the multiple sets of TCI states. It may also be understood that the terminal does not expect to receive the second indication information used for determining the association relationship between the physical shared channel and one set of TCI states. This means that the terminal does not expect the network device to send the second indication information used for determining the association between the physical shared channel and one set of TCI states. In this case, the network device may not send the second indication information used for determining the association between the physical shared channel and one set of TCI states.

As an example, in the case where the terminal does not support the dynamic switching between the single TRP scheme and the SFN scheme, the second indication information may be used for determining multiple sets of TCI states corresponding to the PDSCH among the N sets of TCI states. The network device may transmit the PDSCH with the terminal based on the multiple sets of TCI states determined by the second indication information. As another example, in the case where the terminal does not support the dynamic switching between the single TRP scheme and the SFN scheme, the second indication information may be used for determining the multiple sets of TCI states corresponding to the PUSCH among the N sets of TCI states. The network device may transmit the PUSCH with the terminal based on the multiple sets of TCI states determined by the second indication information.

The disclosure may be applicable to scenarios where the terminal does not support the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, in the case where the terminal does not support the dynamic switching between the single TRP scheme and the SFN scheme and where the second indication information is not configured in the DCI, multiple sets of TCI states corresponding to the physical shared channel are determined among the N sets of TCI states based on default rule. The terminal transmits the physical shared channel based on the multiple sets of TCI states.

In some embodiments, in the case where the terminal does not support the dynamic switching between the single TRP scheme and the SFN scheme and where the second indication information is not configured in the DCI, the network device may determine multiple sets of TCI states corresponding to the physical shared channel among the N sets of TCI states based on the default rule and use the determined multiple sets of TCI states to transmit the corresponding physical shared channel with the terminal.

For example, the terminal does not support the dynamic switching, that is, the terminal does not support the dynamic SFN. In this case, the terminal may transmit the physical shared channel without the dynamically indicated switching. Therefore, the network device may not need to send the second indication information. The network device directly determines the multiple sets of TCI states for transmitting the physical shared channel based on the default rule and transmits the physical shared channel with the terminal based on the multiple sets of TCI states determined by the default rule.

The default rules may be stipulated in the protocol or preset, which is not limited in the disclosure.

The disclosure may be applicable to scenarios where the terminal does not support the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, N is a positive integer greater than or equal to 1.

In some embodiments, N is a positive integer greater than or equal to 1.

For example, in the case where the terminal supports the dynamic switching between the single TRP scheme and the SFN scheme, the first indication information sent by the network device may be used for determining one set of TCI states or multiple sets of TCI states.

For instance, in the case where the terminal supports the dynamic switching between the single TRP scheme and the SFN scheme, the network device may send first indication information multiple times (i.e., multiple pieces of first indication information). A first piece of first indication information that is firstly sent indicates one set of TCI states, such as the first set of TCI states. A second piece of first indication information that is secondly sent indicates one set of TCI states, such as the second set of TCI states. The network device may determine the N sets of TCI states based on the first set of TCI states and the second set of TCI states indicated by the two pieces of first indication information respectively. That is, the N sets of TCI states include the first set of TCI states and the second set of TCI states.

As another example, in the case where the terminal supports the dynamic switching between the single TRP scheme and the SFN scheme, the network device may send first indication information multiple times (i.e., multiple pieces of first indication information). At least one piece of first indication information each includes N sets of TCI states, and the remaining pieces of first indication information may each indicate some TCI states in the N sets of TCI states. For example, the remaining pieces of first indication information may each be used for updating some TCI states in the N sets of TCI states.

As another example, in the case where the terminal supports the dynamic switching between the single TRP scheme and the SFN scheme, the network device may send first indication information multiple times (i.e., multiple pieces of first indication information). A first piece of first indication information that is firstly sent indicates 2 sets of TCI states, such as the first set of TCI states and the second set of TCI states. A second piece of first indication information that is secondly sent indicates 2 sets of TCI states, such as the first set of TCI states and the third set of TCI states. It may be considered that the first set of TCI states indicated by the second piece of first indication information is used for updating the first set of TCI states indicated by the first piece of first indication information. Therefore, the network device may determine the N sets of TCI states based on the TCI states indicated respectively by the two pieces of first indication information. That is, the N sets of TCI states include the first set of TCI states indicated by the second piece of first indication information, the second set of TCI states indicated by the first piece of first indication information, and the third set of TCI states indicated by the second piece of first indication information.

It may be understood that in each embodiment of the disclosure, different pieces of first indication information in the multiple pieces of first indication information may respectively indicate different numbers of TCI states, and the TCI states indicated by different pieces of first indication information may also be different. In other words, the N sets of TCI states may be jointly determined based on the multiple pieces of first indication information. If a set of TCI states is indicated by a certain piece of first indication information, and the same set of TCI states is indicated again by another piece of first indication information that is received after the certain piece of first indication information, then it may be considered that the later received first indication information has updated the TCI states of the earlier received first indication information.

As another example, in the case where the terminal does not support the dynamic switching between the single TRP scheme and the SFN scheme, the first indication information sent by the network device may be used for determining one set of TCI states or multiple sets of TCI states.

For example, in the case where the terminal does not support the dynamic switching between the single TRP scheme and the SFN scheme, the network device may send first indication information multiple times (i.e., multiple pieces of first indication information). A first piece of first indication information that is firstly sent indicates one set of TCI states, such as the first set of TCI states. A second piece of first indication information that is sent secondly indicates one set of TCI states, such as the second set of TCI states. The network device may determine the N sets of TCI states based on the first set of TCI states and the second set of TCI states indicated respectively by the two pieces of first indication information. That is, the N sets of TCI states include the first set of TCI states and the second set of TCI states.

As another example, in the case where the terminal does not support the dynamic switching between the single TRP scheme and the SFN scheme, the network device may send first indication information multiple times (i.e., multiple pieces of first indication information). At least one piece of first indication information each includes N sets of TCI states, and the remaining pieces of first indication information may each indicate some TCI states in the N sets of TCI states. For example, the remaining pieces of first indication information may each be used for updating some TCI states in the N sets of TCI states.

As another example, in the case where the terminal does not support the dynamic switching between the single TRP scheme and the SFN scheme, the network device may send first indication information multiple times (i.e., multiple pieces of first indication information). A first piece of first indication information that is sent firstly indicates two sets of TCI states, such as the first set of TCI states and the second set of TCI states. A second piece first indication information that is sent secondly indicates two sets of TCI states, such as the first set of TCI states and the third set of TCI states. It may be considered that the first set of TCI states indicated by the second piece of first indication information is used for updating the first set of TCI states indicated by the first piece of first indication information. Therefore, the network device may determine the N sets of TCI states based on the TCI states indicated by the two pieces of first indication information. That is, the N sets of TCI states include the first set of TCI states determined by the second piece of first indication information, the second set of TCI states indicated by the first piece of first indication information and the third set of TCI states indicated by the second piece of first indication information.

In some embodiments, the second indication information may be used for determining the association relationship between the physical shared channel and the N sets of TCI states based on the N sets of TCI states determined by each piece of first indication information. In other embodiments, the second indication information may also be used for determining the association relationship between the physical shared channel and the determined N sets of TCI states based on a value of N determined by a piece of first indication information with a largest value of N among the multiple pieces of first indication information.

In some embodiments, the first indication information may be a MAC CE. In other embodiments, the first indication information may also be a DCI.

The disclosure is applicable to scenarios where the terminal supports or does not support the dynamic switching, and the first indication information may indicate one or multiple sets of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, N is a positive integer greater than 1.

In some embodiments, N is a positive integer greater than 1.

For example, in the case where the terminal does not support the dynamic switching between the single TRP scheme and the SFN scheme, the first indication information sent by the network device may be used for determining multiple sets of TCI states.

For example, in the case where the terminal does not support the dynamic switching between the single TRP scheme and the SFN scheme, the network device may send the first indication information once or multiple times (i.e., one piece of first indication information or multiple pieces of first indication information). The network device determines the multiple sets of TCI states through the one piece of first indication information or the multiple pieces of first indication information.

As an example, the network device may send the first indication information multiple times (i.e., multiple pieces of first indication information). A first piece of first indication information that is sent firstly indicates one set of TCI states, such as the first set of TCI states. A second piece of first indication information that is sent secondly indicates one set of TCI states, such as the second set of TCI states. The terminal may determine the N sets of TCI states based on the first set of TCI states and the second set of TCI states indicated respectively by the two pieces of first indication information. That is, the N sets of TCI states include the first set of TCI states and the second set of TCI states.

As another example, the network device may send first indication information multiple times (i.e., multiple pieces of first indication information). At least one piece of first indication information each includes N sets of TCI states, and the remaining pieces of first indication information may each indicate some TCI states in the N sets of TCI states. For example, the remaining pieces of first indication information may each be used for updating some TCI states in the N sets of TCI states.

As another example, in the case where the terminal does not support the dynamic switching between the single TRP scheme and the SFN scheme, the network device may send first indication information multiple times (i.e., multiple pieces of first indication information). A first piece of first indication information that is sent firstly indicates two sets of TCI states, such as the first set of TCI states and the second set of TCI states. A second piece of first indication information that is sent secondly indicates two sets of TCI states, such as the first set of TCI states and the third set of TCI states. It may be considered that the first set of TCI states indicated by the second piece of first indication message is used for updating the first set of TCI states indicated by the first piece of first indication information. Therefore, the network device may determine the N sets of TCI states based on the TCI states indicated by the two pieces of first indication information. That is, the N sets of TCI states include the first set of TCI states determined by the second piece of first indication information, the second set of TCI states indicated by the first piece of first indication information and the third set of TCI states indicated by the second piece of first indication information.

It may be understood that in each embodiment of the disclosure, different pieces of first indication information in the multiple pieces of first indication information may respectively indicate different numbers of TCI states, and the TCI states indicated by the different pieces of first indication information may also be different. In other words, the N sets of TCI states may be jointly determined based on the multiple pieces of first indication information. If a set of TCI states is indicated by a certain piece of first indication information and the same set of TCI states is indicated again by another piece of first indication information received after the certain piece of first indication information, then it may be considered that the later received first indication information has updated the TCI states of the earlier received first indication information.

Certainly, in the case where the first indication information indicates one set of TCI states, it is necessary to ensure that one piece of first indication information for indicating multiple sets of TCI states is also received once or one piece of first indication information for indicating other TCI states different from the above one set of TCI states is also sent once. In other words, the network device needs to determine multiple sets of TCI states through one or more pieces of first indication information.

In some embodiments, the second indication information may be used for determining the association relationship between the physical shared channel and the N sets of TCI states based on the N sets of TCI states determined by each piece of first indication information. In other embodiments, the second indication information may be used for determining the association relationship between the physical shared channel and the determined N sets of TCI states based on a value of N determined by a piece of first indication information with a largest value of N among the multiple pieces of first indication information.

In some embodiments, the first indication information may be a MAC CE. In other embodiments, the first indication information may be a DCI.

The disclosure is applicable to scenarios where the terminal does not support the dynamic switching, and the first indication information may be used for determining multiple sets of TCI states, such that one or multiple sets of TCI states corresponding to the physical shared channel may be determined through the second indication information or the default rule in the case where the physical shared channel is configured with the SFN scheme, thereby improving the transmission flexibility of the physical shared channel based on the unified TCI state(s).

In the method for configuring the transmission configuration indication state according to the embodiments of the disclosure, the SFN scheme includes at least one of SFNschemeA or SFNschem B.

In some embodiments, the SFN scheme includes the SFNschemeA.

In some embodiments, the SFN scheme includes the SFNschemeB.

In some embodiments, the SFN scheme includes the SFNschemeA and the SFNschemeB.

The disclosure is applicable to a variety of SFN scenarios. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, the sending of the first indication information in S21 may include sending at least one piece of first indication information. Each of the at least one piece of first indication information indicates K sets of TCI states, and values of K corresponding to different pieces of first indication information are the same or different, where K is a positive integer. The N sets of TCI states are determined based on K sets of TCI states indicated by a first specified piece of first indication information, and the at least one piece of first indication information includes the first specified piece of first indication information. Or the N sets of TCI states are determined based on the K sets of TCI states indicated by each of the multiple pieces of first indication information.

In some embodiments, the network device may send one or more pieces of first indication information to the terminal. Each piece of first indication information sent by the network device may indicate the K sets of TCI states. It may be understood that values of K corresponding to different pieces of first indication information may be the same or different, where K is a positive integer.

As an example, the network device may send one piece of first indication information to the terminal, and this first indication information indicates K1 sets of TCI states. As another example, the network device may send multiple pieces of first indication information to the terminal, such as two pieces of first indication information. One of the two pieces of first indication information indicates K2 sets of TCI states, and the other one indicates K3 sets of TCI states. It may be understood that the value of K2 and the value of K3 may be the same or different.

In some embodiments, the N sets of TCI states may be determined based on K sets of TCI states indicated by a first specified piece of first indication information, and the first specified piece of first indication information is included in the at least one piece of first indication information.

It may be understood that the network device may determine the N sets of TCI states based on the K sets of TCI states indicated by the first specified piece of first indication information among the multiple pieces of first indication information.

For example, the network device may determine the N sets of TCI states based on the K sets of TCI states indicated by the first specified piece of first indication information. The first specified piece of first indication information is a certain piece of first indication information among the at least one piece of first indication information received by the terminal.

Here, K may be the same as or different from N.

In some embodiments, the N sets of TCI states are determined based on multiple K sets of TCI states indicated by the multiple pieces of first indication information.

It may be understood that the network device may determine the N sets of TCI states based on multiple K sets of TCI states indicated by the multiple pieces of first indication information.

As an example, assuming that the multiple pieces of first indication information are two pieces of first indication information, the network device may determine the N sets of TCI states based on the K1 sets of TCI states indicated by the first piece of first indication information and the K2 sets of TCI states indicated by the second piece of first indication information. K1 may be the same as or different from N, and K2 may be the same as or different from N. For instance, the first piece of first indication information indicates the first set of TCI states and the second set of TCI states, and the second piece of first indication information indicates the first set of TCI states and the third set of TCI states. It may be considered that the first set of TCI states determined by the second piece first indication information is used for updating the first set of TCI states indicated by the first piece of first indication information. The network device determines that the N sets of TCI states include the updated first set of TCI states, the second set of TCI states and the third set of TCI states based on the first piece of first indication information and the second piece of first indication information.

Certainly, the above example only schematically describes the case where the value of K1 and the value of K2 are the same. In other examples, K1 ma be different from K2. For example, the first piece of first indication information indicates a first set of TCI states, a second set of TCI states and a third set of TCI states, while the second piece of first indication information indicates a fourth set of TCI states and a fifth set of TCI states. The network device determines that the N sets of TCI states include the first set of TCI states, the second set of TCI states, the third set of TCI states, the fourth set of TCI states and the fifth set of TCI states based on the first piece of first indication information and the second piece of first indication information.

As another example, the first piece of first indication information indicates a first set of TCI states and a second set of TCI states, and the second piece of first indication information indicates an updated second set of TCI states. Based on the first piece of first indication information and the second piece of first indication information, the network device determines that the N sets of TCI states include the first set of TCI states indicated by the first piece of first indication information and the updated second set of TCI states indicated by the second piece of first indication information.

It may be understood that the disclosure does not limit K1 and K2.

The disclosure provides multiple ways of determining the N sets of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, in the case where the N sets of TCI states are determined based on the K sets of TCI states indicated by the first specified piece of first indication information indication, the first specified piece of first indication information is the most recently received first indication information.

In some embodiments, in the case where the N sets of TCI states are determined based on the K sets of TCI states indicated by the first specified piece of first indication information, the first specified piece of first indication information may be the first indication information that is most recently received by the terminal.

For instance, the network device may determine the N sets of TCI states based on the K sets of TCI states indicated by the most recently sent first indication information. It may be understandable that the first indication information that is most recently sent by the network device may be the last first indication information that is sent by the network device at or before the current moment.

It may be understood that for the K sets of TCI states indicated by the first indication information that is most recently sent by the network device, the value of K may be the same as the value of N, or the value of K may be different from the value of N, for example, smaller than the value of N.

It may be understood that the value of N for the N sets of TCI states determined by the network device may be determined based on a maximum K value or may be determined based on values of K corresponding to different pieces of first indication information, which is not limited in the disclosure.

In the disclosure, the N sets of TCI states are determined through the most recently received first indication information, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, in the case where the N sets of TCI states are determined based on the K sets of TCI states indicated by multiple piece of first indication information, the multiple pieces of first indication information includes a first specified piece of first indication information and a second specified pieces of first indication information. The first specified piece of first indication information is a piece of first indication information that is received most recently. The second specified piece of first indication information is a piece of first indication information before the first specified piece of first indication information. At least one set of TCI states in the second specified piece of first indication information is not updated in the first specified piece of first indication information.

In some embodiments, the network device may determine the N sets TCI states based on the multiple K sets of TCI states indicated by the multiple pieces of first indication information. The multiple pieces of first indication information may include a first specified piece of first indication information and a second specified piece of first indication information.

In some embodiments, the first specified piece of first indication information may be a piece of first indication information that is most recently sent by the network device. The second specified piece of first indication information may be a piece of first indication information sent by the network device before the first specified piece of first indication information, and at least one set of TCI states in the second specified piece of first indication information may not be updated in the first specified piece of first indication information. That is, the first specified piece of first indication information may not include the at least one set of TCI states of the second specified piece of first indication information.

For example, the network device first sends the second specified piece of first indication information, and the second specified piece of first indication information includes the first set of TCI states and the second set of TCI states. Then, the network device sends the first specified piece of first indication information. The first specified piece of first indication information includes the second set of TCI states or the first specified piece of first indication information includes the third set of TCI states and the fourth set of TCI states. That is, the second specified piece of first indication information should at least include one set of TCI states that is not included in the first specified piece of first indication information.

In the case where a certain TCI state included in the first specified piece of first indication information is one of the TCI states included in the second specified piece of first indication information, it may be considered that the first specified piece of first indication information updates the TCI state in the second specified piece of first indication information.

In the disclosure, the N sets of TCI states are determined based on the multiple pieces of first indication information, such that in the case where the physical shared channel is configured with an SFN scheme, one or multiple sets of TCI states corresponding to the physical shared channel may be determined through the second indication information or the default rules, thereby improving the transmission flexibility of the physical shared channel based on the unified TCI state(s).

In the method for configuring the transmission configuration indication state according to the embodiments of the disclosure, the first indication information is carried by a first MAC CE, and the first MAC CE indicates K sets of TCI states. The K sets of TCI states correspond to a codepoint in a TCI state field in a first DCI.

In some embodiments, the first indication information may be carried by a first MAC CE. The first MAC CE may indicate K sets of TCI states. The K sets of TCI states may correspond to a codepoint in the TCI state field in the first DCI. In this case, there is no need to use the TCI state field of the first DCI to further indicate the codepoint.

It may be understood that if K is greater than 1, more than one TCI state must be activated for each codepoint. For example, the terminal does not support the dynamic switching between the single TRP scheme and the SFN scheme.

In the case where K is greater than or equal to 1, the number of TCI states activated for each codepoint may be greater than or equal to 1. For example, the terminal supports the dynamic switching between the single TRP scheme and the SFN scheme, or the terminal does not support the dynamic switching between the single TRP scheme and the SFN scheme. In the case where the terminal does not support the dynamic switching between the single TRP scheme and the SFN scheme, there may be one codepoint corresponding to multiple sets of TCI states, and the remaining codepoints may be used for updating one or more of the multiple sets of TCI states. If a set of TCI states is not updated, then the network device continues to use the old TCI state for transmitting the physical shared channel.

In the disclosure, the TCI states are indicated by the first indication information carried in the MAC CE, such that in the case where the physical shared channel is configured with the SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, the second indication information is carried by the second MAC CE and the second DCI. The second MAC CE indicates multiple K sets of TCI states corresponding to multiple codepoints in the TCI state field in the second DCI, and the TCI state field in the second DCI indicates one codepoint among the multiple codepoints.

In some embodiments, the first indication information may be carried by a second MAC CE and a second DCI. The second MAC CE may indicate multiple K sets of TCI states. It may be understood that each K set of TCI states corresponds to a respective codepoint. In other words, the second MAC CE indicates multiple K sets of TCI states corresponding to multiple codepoints. The TCI state field in the second DCI indicates a codepoint among the multiple codepoints, to further indicate specific K sets of TCI states among the multiple K sets of TCI states.

It may be understood that in the multiple K sets of TCI states corresponding to multiple codepoints, the values of K may be the same or different.

It may be understood that if K is greater than 1, the number of TCI states activated for each codepoint must be greater than 1, and for example, the terminal does not support the dynamic switching between the single TRP scheme and the SFN scheme.

In the case where K is greater than or equal to 1, the number of TCI states activated for each codepoint may be greater than or equal to 1, and for example, the terminal supports the dynamic switching between the single TRP scheme and the SFN scheme, or the terminal does not support the dynamic switching between the single TRP scheme and the SFN scheme. In the case where the terminal does not support the dynamic switching between the single TRP scheme and the SFN scheme, there may be one codepoint corresponding to multiple sets of TCI states, and the remaining codepoints can update one or more of the multiple sets of TCI states. If a set of TCI states is not updated, then the network device continues to use the old TCI state for transmitting the physical shared channel.

In the disclosure, the TCI states are indicated by the second indication information carried in the MAC CE and DCI, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In the method for configuring the transmission configuration indication state according to the embodiments of the disclosure, each set of TCI states includes at least one of a UL TCI state and/or a DL TCI state, or a joint TCI state.

In some embodiments, each set of TCI states may include a UL TCI state and/or a DL TCI state.

As an example, a set of TCI states may include a UL TCI state. As another example, a set of TCI states may include a DL TCI state. As still another example, a set of TCI states may include a UL TCI state and a DL TCI state.

In some embodiments, each set of TCI states may include a joint TCI state.

It may be understood that the joint TCI state may be used for jointly indicating the uplink TCI state and the downlink TCI state at the same time.

The disclosure provides multiple expressions for a set of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on a unified TCI state(s).

In the method for configuring the transmission configuration indication state according to the embodiments of the disclosure, the physical shared channel includes at least one of: a PUSCH or a PDSCH.

In some embodiments, the physical shared channel includes a PUSCH.

For example, the terminal may determine the association relationship between the PUSCH and the N sets of TCI states based on a TCI selection field of the second indication information.

In some embodiments, the physical shared channel includes a PDSCH.

For example, the terminal may determine the association relationship between the PDSCH and the N sets of TCI states based on a TCI selection field of the second indication information.

In some embodiments, the physical shared channel includes the PUSCH and the PDSCH.

For example, the terminal may determine the association relationship between the PUSCH and the N sets of TCI states and determine the association relationship between the PDSCH and the N sets of TCI states based on a TCI selection field of the second indication information.

The disclosure is applicable to kinds of physical shared channels, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

It should be noted that those skilled in the art may understand that the various implementations/embodiments involved in the embodiments of the disclosure may be used in conjunction with the aforementioned embodiments or may be used independently. Whether used alone or in conjunction with the aforementioned embodiments, the implementation principle is similar. In the implementation of the disclosure, some embodiments are described in terms of implementations used together. Certainly, those skilled in the art may understand that such examples are not limitations of the embodiments of the disclosure.

Based on the same concept, the embodiments of the disclosure also provide apparatuses and devices for configuring a transmission configuration indication state.

It may be understandable that the apparatuses and devices for configuring the transmission configuration indication state according to the embodiments of the disclosure include hardware structures and/or software modules corresponding to the execution of each function to realize the above functions. In combination with the units and algorithm steps of each example disclosed in the embodiments of the disclosure, the embodiments of the disclosure may be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to exceed the scope of the technical solution of the embodiments of the disclosure.

FIG. 4 is a schematic diagram illustrating an apparatus for configuring a transmission configuration indication state according to an example embodiment. As illustrated in FIG. 4, the apparatus 200 includes a receiving module 201 configured to receive first indication information. the first indication information is used for determining unified TCI state(s), the unified TCI state(s) includes N sets of TCI states, where N is a positive integer. The receiving module 201 is further configured to receive second indication information or the apparatus includes a processing module 202 configured to determine a default rule. The second indication information or the default rule is used for determining one or multiple sets of TCI states corresponding to a physical shared channel among the N sets of TCI states. The physical shared channel is configured for transmission based on an SFN scheme.

In the disclosure, in the case where the physical shared channel is configured with an SFN scheme, one or multiple sets of TCI states corresponding to the physical shared channel are determined through other indication information different from indication information for indicating the unified TCI state(s) or the default rule, thereby improving the transmission flexibility of the physical shared channel based on the unified TCI state(s).

In some embodiments, in the case where the terminal supports the dynamic switching between a single TRP scheme and an SFN scheme, the second indication information is used for determining one or multiple sets of TCI states corresponding to the physical shared channel among the N sets of TCI states. The terminal transmits the physical shared channel based on the one or multiple sets of TCI states.

The disclosure may be applicable to scenarios where the terminal supports the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, in the case where the terminal does not support the dynamic switching between the single TRP scheme and the SFN scheme, the second indication information is used for determining multiple sets of TCI states corresponding to the physical shared channel among the N sets of TCI states, in which the terminal transmits the physical shared channel based on the multiple sets of TCI states.

The disclosure may be applicable to scenarios where the terminal does not support the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, in the case where the terminal does not support the dynamic switching between the single TRP scheme and the SFN scheme and where the second indication information is configured not to appear in a DCI, multiple sets of TCI states corresponding to the physical shared channel are determined among the N sets of TCI states based on the default rule, in which the terminal transmits the physical shared channel based on the multiple sets of TCI states.

The disclosure may be applicable to scenarios where the terminal does not support the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, N is a positive integer greater than or equal to 1.

The disclosure is applicable to scenarios where the terminal supports or does not support the dynamic switching and where the first indication information may indicate one or multiple sets of TCI states. In this way, in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, N is a positive integer greater than 1.

The disclosure is applicable to scenarios where the terminal does not support the dynamic switching, and the first indication information may be used for determining multiple sets of TCI states, such that one or multiple sets of TCI states corresponding to the physical shared channel may be determined through the second indication information or the default rule in the case where the physical shared channel is configured with the SFN scheme, thereby improving the transmission flexibility of the physical shared channel based on the unified TCI state(s).

In some implementations, the SFN scheme includes at least one of: SFNschemeA or SFNschemeB.

The disclosure is applicable to a variety of SFN scenarios. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some implementations, the receiving module 201 is further configured to receive at least one piece of first indication information. Each of the at least one piece of first indication information indicates K sets of TCI states, and values of K corresponding to different pieces of first indication information are the same or different, where K is a positive integer. The N sets of TCI states are determined based on K sets of TCI states indicated by a first specified piece of first indication information, and the at least one piece of first indication information includes the first specified piece of first indication information. Or the N sets of TCI states are determined based on the K sets of TCI states indicated by the multiple pieces of first indication information.

The disclosure provides multiple ways for determining the N sets of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, in the case where the N sets of TCI states are determined based on the K sets of TCI states indicated by first specified piece of first indication information, the first specified piece of first indication information is the most recently received first indication information.

In the disclosure, the N sets of TCI states are determined through the most recently received first indication information, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, in the case where the N sets of TCI states are determined based on multiple K sets of TCI states indicated by multiple pieces of first indication information, the multiple pieces of first indication information include a first specified piece of first indication information and a second specified piece of first indication information. The first specified piece of first indication information is the most recently received first indication information. The second specified piece of first indication information is a piece of first indication information before the first specified piece of first indication information, and at least one set of TCI states of the second specified piece of first indication information is not updated in the first specified piece of first indication information.

In the disclosure, the N sets of TCI states are determined based on multiple pieces of first indication information, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some implementations, the first indication information is carried by a first MAC CE, and the first MAC CE indicates K sets of TCI states, where the K sets of TCI states correspond to a codepoint in a TCI state field in a first DCI.

In the disclosure, the TCI states are indicated by the first indication information carried in the MAC CE, such that in the case where the physical shared channel is configured with the SFN scheme, one or multiple sets of TCI states corresponding to the physical shared channel may be determined through the second indication information or the default rule, thereby improving the transmission flexibility of the physical shared channel based on the unified TCI state(s).

In some implementations, the second indication information is carried by a second MAC CE and a second DCI. The second MAC CE indicates multiple K sets of TCI states corresponding to multiple codepoints for the TCI state field in the second DCI, and the TCI state field in the second DCI indicates one codepoint among multiple codepoints.

In the disclosure, the TCI states are indicated by the second indication information carried by the MAC CE and the DCI, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some implementations, each set of TCI states includes at least one of a UL TCI state and/or a DL TCI state, or a joint TCI state.

The disclosure provides multiple expressions for a set of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some implementations, the physical shared channel includes at least one of: a PUSCH or a PDSCH.

The disclosure is applicable to kinds of physical shared channels, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

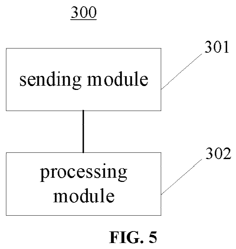

FIG. 5 is a schematic diagram illustrating another apparatus for configuring a transmission configuration indication state according to an example embodiment. As illustrated in FIG. 5, the apparatus 300 includes a sending module 301 configured to send first indication information, in which the first indication information is used for determining unified TCI state(s), the unified TCI state(s) includes N sets of TCI states, where N is a positive integer. The sending module 301 is further configured to send second indication information or the apparatus 300 includes a processing module 302 configured to determine a default rule, in which the second indication information or the default rule is used for determining one or multiple sets of TCI states corresponding to the physical shared channel among the N sets of TCI states; in which the physical shared channel is configured for transmission based on the SFN scheme.

In the disclosure, in the case where the physical shared channel is configured with an SFN scheme, one or multiple sets of TCI states corresponding to the physical shared channel are determined through other indication information different from indication information for indicating the unified TCI state(s) or the default rule, thereby improving the transmission flexibility of the physical shared channel based on the unified TCI state(s).

In some embodiments, in the case where the terminal supports the dynamic switching between a single TRP scheme and an SFN scheme, the second indication information is used for determining one or multiple sets of TCI states corresponding to the physical shared channel among the N sets of TCI states, in which the terminal transmits the physical shared channel based on the one or multiple sets of TCI states.

The disclosure may be applicable to scenarios where the terminal supports the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, in the case where the terminal does not support the dynamic switching between the single TRP scheme and the SFN scheme, the second indication information is used for determining multiple sets of TCI states corresponding to the physical shared channel among the N sets of TCI states, in which the terminal transmits the physical shared channel based on the multiple sets of TCI states.

The disclosure may be applicable to scenarios where the terminal does not support the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, in the case where the terminal does not support the dynamic switching between the single TRP scheme and the SFN scheme and where the second indication information is configured not to appear in a DCI, multiple sets of TCI states corresponding to the physical shared channel are determined among the N sets of TCI states based on the default rule, in which the terminal transmits the physical shared channel based on the multiple sets of TCI states.

The disclosure may be applicable to scenarios where the terminal does not support the dynamic switching. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, N is a positive integer greater than or equal to 1.

The disclosure is applicable to scenarios where the terminal supports or does not support the dynamic switching and where the first indication information may indicate one or multiple sets of TCI states, such as in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, N is a positive integer greater than 1.

The disclosure is applicable to scenarios where the terminal does not support the dynamic switching, and the first indication information may be used for determining multiple sets of TCI states, such that one or multiple sets of TCI states corresponding to the physical shared channel may be determined through the second indication information or the default rule in the case where the physical shared channel is configured with the SFN scheme, thereby improving the transmission flexibility of the physical shared channel based on the unified TCI state(s).

In some implementations, the SFN scheme includes at least one of SFNschemeA or SFNschemeB.

The disclosure is applicable to a variety of SFN scenarios. In the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, the sending module 301 is further configured to: send at least one piece of first indication information, in which each of the at least one piece of first indication information indicates K sets of TCI states, and values of the K corresponding to different pieces of first indication information are the same or different, where K is a positive integer. The N sets of TCI states are determined based on K sets of TCI states indicated by a first specified piece of first indication information, and the at least one piece of first indication information includes the first specified piece of first indication information. Or the N sets of TCI states are determined based on multiple K sets of TCI states indicated by the multiple pieces of first indication information.

The disclosure provides multiple ways for determining the N sets of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some implementations, in the case where the N sets of TCI states are determined based on the K sets of TCI states indicated by a specified piece of first indication information, the specified piece of first indication information is the most recently sent first indication information.

In the disclosure, the N sets of TCI states are determined through the most recently received first indication information, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, in the case where the N sets of TCI states are determined based on multiple K sets of TCI states indicated by the multiple pieces of first indication information, the multiple pieces of first indication information include a first specified piece of first indication information and a second specified piece of first indication information. The first specified piece of first indication information is the first indication information most recently sent. The second specified piece of first indication information is a piece of first indication information before the first specified piece of first indication information, and at least one set of TCI states of the second specified piece of first indication information is not updated in the first specified piece of first indication information.

In the disclosure, the N sets of TCI states are determined through the multiple pieces of first indication information, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some implementations, the first indication information is carried by a first MAC CE, and the first MAC CE indicates K sets of TCI states, where the K sets of TCI states correspond to a codepoint in a TCI state field in a first DCI.

In the disclosure, the TCI states are indicated by the first indication information carried in the MAC CE, such that in the case where the physical shared channel is configured with the SFN scheme, one or multiple sets of TCI states corresponding to the physical shared channel may be determined through the second indication information or the default rule, thereby improving the transmission flexibility of the physical shared channel based on the unified TCI state(s).

In some embodiments, the second indication information is carried by a second MAC CE and a second DCI. The second MAC CE indicates multiple K sets of TCI states corresponding to multiple codepoints for the TCI state field in the second DCI, and the TCI state field in the second DCI indicates one codepoint among multiple codepoints.

In the disclosure, the TCI states are determined through the second indication information carried in the MAC CE and the DCI, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

In some embodiments, each set of TCI states includes at least one of: a UL TCI state and/or a DL TCI state, or a joint TCI state.

The disclosure provides multiple expressions for a set of TCI states, such that in the case where the physical shared channel is configured with an SFN scheme, one or multiple sets of TCI states corresponding to the physical shared channel may be determined through the second indication information or the default rule, thereby improving the transmission flexibility of the physical shared channel based on a unified TCI state(s).

In some implementations, the physical shared channel includes at least one of: a PUSCH or a PDSCH.

The disclosure is applicable to kinds of physical shared channels, such that in the case where the physical shared channel is configured with an SFN scheme, one or multiple sets of TCI states corresponding to the physical shared channel may be determined through the second indication information or the default rule, thereby improving the transmission flexibility of the physical shared channel based on the unified TCI state(s).

It may be understandable that the above-mentioned apparatus 200 may further include a sending module and the apparatus 300 may further include a receiving module. That is to say, the above-mentioned apparatuses 200 and 300 may further include any modules as needed, which is not limited in the disclosure.

Regarding the apparatuses in the above embodiments, the specific manner in which each module performs operations has been described in detail in the embodiments of the methods and will not be elaborated here.

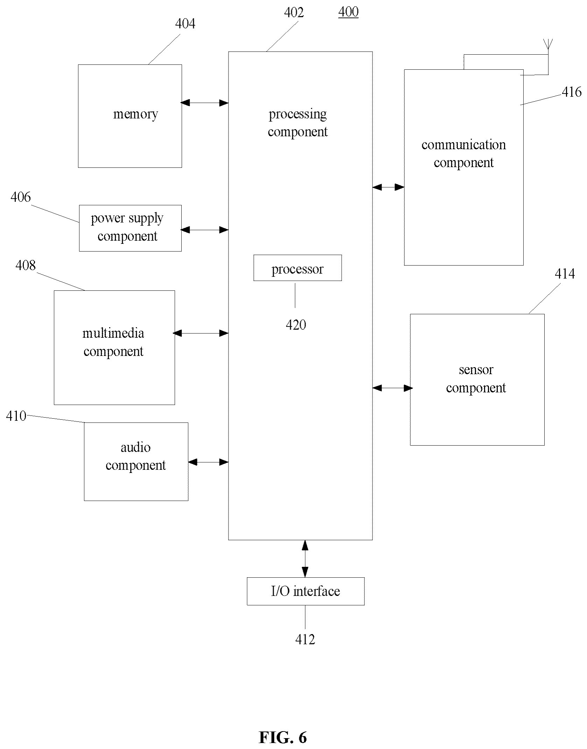

FIG. 6 is a schematic diagram illustrating a device for configuring a transmission configuration indication state according to an example embodiment. For example, the device 400 may be any terminal such as a mobile phone, a computer, a digital broadcast terminal, a message transceiver device, a game console, a tablet device, a medical device, a fitness device, a personal digital assistant, etc.

As illustrated in FIG. 6, the device 400 may include one or more of: a processing component 402, a memory 404, a power supply component 406, a multimedia component 408, an audio component 410, an input/output (I/O) interface 412, a sensor component 414, and a communication component 416.

The processing component 402 generally controls an overall operation of the device 400, such as operations associated with display, phone calls, data communications, camera operations, and recording operations. The processing component 402 may include one or more processors 420 to execute instructions to perform all or part of the steps of the above-mentioned methods. In addition, the processing component 402 may include one or more modules to facilitate the interaction between the processing component 402 and other components. For example, the processing component 402 may include a multimedia module to facilitate the interaction between the multimedia component 408 and the processing component 402.

The memory 404 is configured to store various types of data to support operations on the device 400. Examples of such data include instructions for any application or method operating on the device 400, contact data, phone book data, messages, pictures, videos, etc. The memory 404 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 406 provides power to various components of the device 400. The power component 406 may include a power management system, one or more power supplies, and other components associated with generating, managing, and distributing power for the device 400.

The multimedia component 408 includes a screen that provides an output interface between the device 400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 408 includes a front-facing camera and/or a rear-facing camera. When the device 400 is in an operating mode, such as a shooting mode or a video mode, the front-facing camera and/or the rear-facing camera may receive external multimedia data. Each front-facing camera and the rear-facing camera may be a fixed optical lens system or have a focal length and optical zoom capability.

The audio component 410 is configured to output and/or input audio signals. For example, the audio component 410 includes a microphone (MIC), and when the device 400 is in an operating mode, such as a call mode, a recording mode, and a speech recognition mode, the microphone is configured to receive an external audio signal. The received audio signal may be further stored in the memory 404 or sent via the communication component 416. In some embodiments, the audio component 410 also includes a speaker for outputting audio signals.

The I/O interface 412 provides an interface between the processing component 402 and peripheral interface modules, such as keyboards, click wheels, buttons, etc. These buttons may include, but are not limited to, a home button, a volume button, a start button, and a lock button.

The sensor component 414 includes one or more sensors for providing various aspects of status assessment for the device 400. For example, the sensor component 414 may detect the open/closed state of the device 400, the relative positioning of components, such as the display and keypad of the device 400, and the sensor component 414 may also detect the position change of the device 400 or a component of the device 400, the presence or absence of user contact with the device 400, the orientation or acceleration/deceleration of the device 400, and the temperature change of the device 400. The sensor component 414 may include a proximity sensor configured to detect the presence of nearby objects without any physical contact. The sensor component 414 may also include an optical sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate wired or wireless communication between the device 400 and other devices. The device 400 may access a wireless network based on a communication standard, such as Wi-Fi, 2G or 3G, or a combination thereof. In an example embodiment, the communication component 416 receives a broadcast signal or broadcast-related information from an external broadcast management system via a broadcast channel. In an example embodiment, the communication component 416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, the device 400 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, a non-transitory computer-readable storage medium including instructions is also provided, such as a memory 404 including instructions, which may be executed by a processor 420 of the device 400 to perform the above methods. For example, the non-transitory computer-readable storage medium may be a ROM, a random access memory (RAM), a CD-ROM, a magnetic tape, a floppy disk, an optical data storage device, etc.

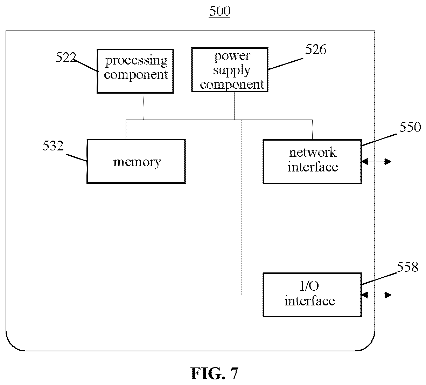

FIG. 7 is a schematic diagram illustrating another device for configuring a transmission configuration indication state according to an example embodiment. For example, the device 500 may be provided as a base station or a server. As illustrated in FIG. 7, the device 500 includes a processing component 522, which further includes one or more processors, and a memory resource represented by a memory 532 for storing instructions executable by the processing component 522, such as an application. The application stored in the memory 532 may include one or more modules each corresponding to a set of instructions. In addition, the processing component 522 is configured to execute instructions to perform the above methods.

The device 500 may also include a power supply component 526 configured to perform power management of the device 500, a wired or wireless network interface 550 configured to connect the device 500 to a network, and an input/output (I/O) interface 558. The device 500 may operate based on an operating system stored in the memory 532, such as Windows Server^{™}, Mac OS X^{™}, Unix^{™}, Linux^{™}, FreeBSD^{™}, or the like.

In the disclosure, in the case of single-DCI multiple TRPs unified TCI state indication, when the physical shared channel is configured as the SFN scheme and the terminal supports the dynamic SFN, a method for configuring the unified TCI state(s) and a method for indicating the association between PDSCH/PUSCH and the unified TCI state are provided, thereby improving the transmission flexibility of PDSCH/PUSCH based on the unified TCI state(s).

The disclosure discloses a method for indicating the TCI states for a terminal that supports or does not support the dynamic SFN, in a case of single-DCI multiple TRPs unified TCI state, when PDSCH/PUSCH is configured as an SFN scheme, thereby improving M-TRP transmission performance.

It is further understood that in the disclosure, "a plurality of" refers to two or more than two, and other quantifiers are similar thereto. "And/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a", "an", and "the" are also intended to include plural forms, unless the context clearly indicates other meanings.

It is further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. may be used interchangeably. For example, without departing from the scope of the disclosure, the first information may also be referred to as the second information, and similarly, the second information may also be referred to as the first information.

It is further understood that the meanings of the words "in response to" and "if" involved in the disclosure depend on the context and the actual usage scenario. For example, the word "in response to" used herein may be interpreted as "at the time of..." or "when..." or "if" or "in a case that".

It is further understood that, although the operations are described in a specific order in the drawings in the embodiments of the disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the disclosure after considering the specification and practicing the disclosure disclosed herein. This application is intended to cover any variations, uses, or adaptations of the disclosure that follow the general principles of the disclosure and include common knowledge or customary technical means in the art that are not disclosed in the disclosure.

It should be understood that the disclosure is not limited to the precise structures that have been described above and shown in the drawings, and that various modifications and changes may be made without departing from the scope thereof. The scope of the disclosure is limited only by the scope of the appended claims.

## Claims

1. A method for configuring a transmission configuration indication (TCI) state, performed by a terminal, the method comprising:
receiving first indication information, wherein the first indication information is used for determining unified TCI states, and the unified TCI states comprise N sets of TCI states, where N is a positive integer;
receiving second indication information or determining a default rule, wherein the second indication information or the default rule is used for determining one or a plurality of sets of TCI states corresponding to a physical shared channel among the N sets of TCI states;
wherein the physical shared channel is configured for transmission based on a single frequency network (SFN) scheme.

2. The method of claim 1, wherein in a case where the terminal supports a dynamic switching between a single transmission reception point (TRP) scheme and the SFN scheme, the second indication information is used for determining the one or the plurality of sets of TCI states corresponding to the physical shared channel among the N sets of TCI states;
wherein the terminal transmits the physical shared channel based on the one or the plurality of sets of TCI states.

3. The method of claim 1, wherein in a case where the terminal does not support a dynamic switching between a single transmission reception point (TRP) scheme and the SFN scheme, the second indication information is used for determining the plurality of sets of TCI states corresponding to the physical shared channel among the N sets of TCI states;
wherein the terminal transmits the physical shared channel based on the plurality of sets of TCI states.

4. The method of claim 1, wherein in a case where the terminal does not support a dynamic switching between a single transmission reception point (TRP) scheme and the SFN scheme, the second indication information is configured not to be comprised in downlink control information (DCI), and the plurality of sets of TCI states corresponding to the physical shared channel are determined among the N sets of TCI states based on a default rule;
wherein the terminal transmits the physical shared channel based on the plurality of sets of TCI states.

5. The method of any one of claims 2 to 4, wherein N is a positive integer greater than or equal to 1.

6. The method of claim 3 or 4, wherein N is a positive integer greater than 1.

7. The method of claim 1, wherein the SFN scheme comprises at least one of:
an SFNschemeA, or
an SFNschemeB.

8. The method of claim 1, wherein receiving the first indication information comprises:
receiving at least one piece of first indication information, wherein each of the at least one piece of first indication information indicates K sets of TCI states, and values of K corresponding to different pieces of first indication information are the same or different, where K is a positive integer;
wherein the N sets of TCI states are determined based on the K sets of TCI states indicated by a first specified piece of first indication information, and the first specified piece of first indication information is comprised in the at least one piece of first indication information, or
wherein the N sets of TCI states are determined based on a plurality of K sets of TCI states indicated by a plurality of pieces of first indication information.

9. The method of claim 8, wherein in a case where the N sets of TCI states are determined based on the K sets of TCI states indicated by the first specified piece of first indication information, the first specified piece of first indication information is a piece of first indication information received most recently.

10. The method of claim 8, wherein in a case where the N sets of TCI states are determined based on the plurality of K sets of TCI states indicated by the plurality of pieces of first indication information, the plurality of pieces of first indication information comprise a first specified piece of first indication information and a second specified piece of first indication information;
wherein the first specified piece of first indication information is a piece of first indication information received most recently, the second specified piece of first indication information is a piece of first indication information received before the first specified piece of first indication information, and at least one set of TCI states in the second specified piece of first indication information is not updated in the first specified piece of first indication information.

11. The method of claim 1, wherein the first indication information is carried by a first media-access-control control unit (MAC CE), the first MAC CE indicates K sets of TCI states, and the K sets of TCI states correspond to a codepoint in a TCI state field in first downlink control information (DCI).

12. The method of claim 1, wherein the second indication information is carried by a second media-access-control control unit (MAC CE) and second downlink control information (DCI), the second MAC CE indicates a plurality of K sets of TCI states corresponding to a plurality of codepoints for a TCI state field in the second DCI, and the TCI state field in the second DCI indicates one codepoint among the plurality of codepoints.

13. The method of claim 1, wherein each set of TCI states comprises at least one of:
an uplink (UL) TCI state and/or a downlink (DL) TCI state, or
a joint TCI state.

14. The method of claim 1, wherein the physical shared channel comprises at least one of:
a physical uplink shared channel (PUSCH), or
a physical downlink shared channel (PDSCH).

15. A method for configuring a transmission configuration indication (TCI) state, performed by a network device, the method comprising:
sending first indication information, wherein the first indication information is usable by a terminal to determine unified TCI states, and the unified TCI states comprise N sets of TCI states, where N is a positive integer; and
sending second indication information or determining a default rule, wherein the second indication information or the default rule is useable by the terminal for determining one or a plurality of sets of TCI states corresponding to a physical shared channel among the N sets of TCI states;
wherein the physical shared channel is configured for transmission based on a single frequency network (SFN) scheme.

16. The method of claim 15, wherein in a case where the terminal supports a dynamic switching between a single transmission reception point (TRP) scheme and the SFN scheme, the second indication information is used for determining the one or the plurality of sets of TCI states corresponding to the physical shared channel among the N sets of TCI states;
wherein the terminal transmits the physical shared channel based on the one or the plurality of sets of TCI states.

17. The method of claim 15, wherein in a case where the terminal does not support a dynamic switching between a single transmission reception point (TRP) scheme and the SFN scheme, the second indication information is used for determining the plurality of sets of TCI states corresponding to the physical shared channel among the N sets of TCI states;
wherein the terminal transmits the physical shared channel based on the plurality of sets of TCI states.

18. The method of claim 15, wherein in a case where the terminal does not support a dynamic switching between a single transmission reception point (TRP) scheme and the SFN scheme, the second indication information is configured not to be comprised in downlink control information (DCI), the plurality of sets of TCI states corresponding to the physical shared channel are determined among the N sets of TCI states based on a default rule;
wherein the terminal transmits the physical shared channel based on the plurality of sets of TCI states.

19. The method of any one of claims 16 to 18, wherein N is a positive integer greater than or equal to 1.

20. The method of claim 17 or 18, wherein N is a positive integer greater than 1.

21. The method of claim 15, wherein the SFN scheme comprises at least one of:
an SFNschemeA, or
an SFNschemeB.

22. The method of claim 15, wherein sending the first indication information comprises:
sending at least one piece of first indication information, wherein each of the at least one piece of first indication information indicates K sets of TCI states, and values of K corresponding to different pieces of first indication information are the same or different, where K is a positive integer;
wherein the N sets of TCI states are determined based on the K sets of TCI states indicated by a first specified piece of first indication information, and the first specified piece of first indication information is comprised in the at least one piece of first indication information, or
wherein the N sets of TCI states are determined based on a plurality of K sets of TCI states indicated by a plurality of pieces of first indication information.

23. The method of claim 22, wherein in a case where the N sets of TCI states are determined based on the K sets of TCI states indicated by the first specified piece of first indication information, the first specified piece of first indication information is a piece of first indication information received most recently.

24. The method of claim 22, wherein in a case where the N sets of TCI states are determined based on the plurality of K sets of TCI states indicated by the plurality of pieces of first indication information, the plurality of pieces of first indication information comprise a first specified piece of first indication information and a second specified piece of first indication information;
wherein the first specified piece of first indication information is a piece of first indication information received most recently, the second specified piece of first indication information is a piece of first indication information received before the first specified piece of first indication information, and at least one set of TCI states in the second specified piece of first indication information is not updated in the first specified piece of first indication information.

25. The method of claim 15, wherein the first indication information is carried by a first media-access-control control unit (MAC CE), the first MAC CE indicates K sets of TCI states, and the K sets of TCI states correspond to a codepoint in a TCI state field in first downlink control information (DCI).

26. The method of claim 15, wherein the second indication information is carried by a second media-access-control control unit (MAC CE) and second downlink control information (DCI), the second MAC CE indicates a plurality of K sets of TCI states corresponding to a plurality of codepoints for a TCI state field in the second DCI, and the TCI state field in the second DCI indicates one codepoint among the plurality of codepoints.

27. The method of claim 15, wherein each set of TCI states comprises at least one of:
an uplink (UL) TCI state and/or a downlink (DL) TCI state, or
a joint TCI state.

28. The method of claim 15, wherein the physical shared channel comprises at least one of:
a physical uplink shared channel (PUSCH), or
a physical downlink shared channel (PDSCH).

29. An apparatus for configuring a transmission configuration indication (TCI) state, comprising:
a receiving module, configured to receive first indication information, wherein the first indication information is used for determining unified TCI states, and the unified TCI states comprise N sets of TCI states, where N is a positive integer;
wherein the receiving module is further configured to receive second indication information or a processing module is configured to determine a default rule, and the second indication information or the default rule is used for determining one or a plurality of sets of TCI states corresponding to a physical shared channel among the N sets of TCI states;
wherein the physical shared channel is configured for transmission based on a single frequency network (SFN) scheme.

30. An apparatus for configuring a transmission configuration indication (TCI) state, comprising:
a sending module, configured to send first indication information, wherein the first indication information is used for determining unified TCI states, and the unified TCI states comprise N sets of TCI states, where N is a positive integer;
wherein the sending module is further configured to send second indication information or a processing module is configured to determine a default rule, and the second indication information or the default rule is used for determining one or a plurality of sets of TCI states corresponding to a physical shared channel among the N sets of TCI states;
wherein the physical shared channel is configured for transmission based on a single frequency network (SFN) scheme.

31. A device for configuring a transmission configuration indication (TCI) state, comprising:
a processor, and
a memory for storing processor-executable instructions;
wherein the processor is configured to perform the method of any one of claims 1 to 14.

32. A device for configuring a transmission configuration indication (TCI) state, comprising::
a processor, and
a memory for storing processor-executable instructions;
wherein the processor is configured to perform the method of any one of claims 15 to 28.

33. A non-temporary computer-readable storage medium, wherein when instructions in the storage medium are executed by a processor of a terminal, the terminal is enabled to perform the method of any one of claims 1 to 14.

34. A non-temporary computer-readable storage medium, wherein when instructions in the storage medium are executed by a processor of a terminal, the terminal is enabled to perform the method of any one of claims 15 to 28.
